(19) Europäisches Patentamt / European Patent Office / Office européen des brevets

(11) **EP 2 920 888 B1**

(12) **EUROPEAN PATENT SPECIFICATION**

(45) Date of publication and mention of the grant of the patent:
**09.08.2017 Bulletin 2017/32**

(21) Application number: **12888370.9**

(22) Date of filing: **16.11.2012**

(51) Int Cl.:
*H04B 1/709* $^{(2011.01)}$

(86) International application number:
**PCT/SE2012/051267**

(87) International publication number:
**WO 2014/077749 (22.05.2014 Gazette 2014/21)**

(54) **EFFICIENT GENERATION OF SPREADING SEQUENCE CORRELATIONS USING LOOKUP TABLES**

EFFIZIENTE ERZEUGUNG VON SPREIZSEQUENZKORRELATIONEN MIT SUCHTABELLEN

GÉNÉRATION EFFICACE DE CORRÉLATIONS DE SÉQUENCES D'ÉTALEMENT À L'AIDE DE TABLES DE CONVERSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2015 Bulletin 2015/39**

(73) Proprietor: **Telefonaktiebolaget LM Ericsson (publ)**
**164 83 Stockholm (SE)**

(72) Inventors:
• **JOHANSSON, Niklas**
  **Sunnyvale, CA 94089 (US)**
• **WANG, Yi-Pin Eric**
  **Fremont, California 94539 (US)**
• **GRANT, Stephen**
  **Pleasanton, California 94566 (US)**
• **HE, Ning**
  **S-191 34 Sollentuna (SE)**
• **SAMUEL BEBAWY, Michael**
  **Santa Clara, CA 94045 (US)**

(74) Representative: **Ericsson**
**Patent Development**
**Torshamnsgatan 21-23**
**164 80 Stockholm (SE)**

(56) References cited:
| | |
|---|---|
| EP-A1- 1 128 564 | WO-A1-02/093768 |
| WO-A1-2012/062427 | US-A1- 2004 071 200 |
| US-B1- 6 724 810 | US-B1- 6 891 882 |

**Description**

**TECHNICAL FIELD**

The technology relates to communications, and in particular, to receiving and detecting multiple symbols transmitted using spreading codes.

**BACKGROUND**

For code division multiple access (CDMA) systems where spreading codes or sequences are used to separate data symbols from each other, from control channels and from symbols to/from other users, advanced non-linear receivers using joint detection, such as sphere decoders, assisted maximum likelihood detection (AMLD), multi-stage group detection (MSGD) etc., or symbol-level interference cancellation (IC) require the computation of spreading code correlations to achieve better performance than linear receivers. However, for wideband CDMA (WCDMA) and similar systems, the spreading sequence correlations are symbol-dependent since the scrambling sequence is symbol-dependent. For example, two spreading sequences of spreading factor 16 have one set of correlation values for one symbol period, but another set of correlation values for the next symbol period. Because the correlations change from symbol to symbol, online correlation computation is very demanding. Moreover, the scrambling codes are often long, e.g., for a WCDMA system 10 milliseconds (or 38400 chips long), which also means that precomputed correlations of the spreading sequences require large amounts of memory to store such large number of correlations.

What is needed then is an efficient way to store and provide spreading sequence correlations.

**SUMMARY**

Apparatus receives a signal containing a block of multiple symbols, each symbol containing information bits spread by a spreading sequence of chips. Each spreading sequence is determined by a channelization sequence and a first complex-valued scrambling sequence of chips or a second complex-valued scrambling sequence of chips. Correlation circuitry processes each block using a set of multiple spreading sequences using one or more correlations between one or more pairs of spreading sequences in the set. Spreading sequence correlation values between each pair of the multiple spreading sequences in the set are manipulated and stored in one or more lookup tables. An address generator addresses one of the lookup tables with an address determined using a first set of reduced basic scrambling bits to retrieve one or more correlation values from the addressed lookup table. The first set of reduced basic scrambling bits is based on manipulation of one set of the basic scrambling bits that reduces a number of bits included in the determined address to less than a number of binary values in the one set of basic scrambling bits. The one set of basic scrambling bits is used to construct one of the first and second complex-valued scrambling sequences. Symbol estimation circuitry uses the retrieved one or more correlation values in mitigating spreading sequence correlation interference between spreading sequences in the set in a process to detect symbol values for two or more information symbols in the received block. In one example embodiment, the one set of the basic scrambling bits is the one set of scrambling generation bits. In another example embodiment, the one set of the basic scrambling bits is expressed as the one scrambling sequence. Without loss of generality, the one scrambling sequence or the one set of the basic scrambling bits are used as examples.

In preferred example embodiments, manipulation of the one scrambling sequence includes exploiting one or more redundancies of the one scrambling sequence. In one example embodiment, the manipulation includes eliminating at least one bit in a row address for addressing the one lookup table based on a redundant bit value in the one scrambling sequence. In another example embodiment, the manipulation includes storing only one correlation value for two different correlations between each pair of the multiple spreading sequences. In yet another example embodiment, the manipulation includes storing rows in the lookup table only where a first bit in each of two of the first set of basic scrambling bits is equal to 0 in a 0/1 representation of binary bits.

In an example implementation, each complex-valued scrambling sequence is determined by a first binary-valued scrambling sequence that determines a real part of the complex-valued scrambling sequence and a second binary-valued scrambling sequence that determines an imaginary part of the complex-valued scrambling sequence. A code generator generates the first and second binary-valued scrambling sequences for the first complex-valued scrambling sequence. A scrambling bits processor determines the first set of the address bits based on the first and second binary-valued scrambling sequences for the first complex-valued scrambling sequence.

In one variation, the address includes a first set of address bits and a second set of address bits. The code generator generates the first and second binary-valued scrambling sequences for the second complex-valued scrambling sequence. The scrambling bits processor determines a second set of address bits based on the first and second binary-valued scrambling sequences for the second complex-valued scrambling sequence. The one lookup table is addressed with an address determined using the first set of address bits and the second set of the address bits to retrieve a first set of correlation values associated with the spreading sequences of the two or more information symbols.

In example embodiments, mapping circuitry maps the first set of correlation values to an actual correlation value.

In example embodiments, determining the first set of address bits includes using an anchor bit among the first set of the basic scrambling bits to obtain an exclusive-OR (XOR) product with each of the other bits among the first set of the basic scrambling bits and forming the first set of address bits based on the XOR products.

In example embodiments, the first set of address bits represents a number that is greater than or equal to the number represented by the second set of address bits.

In example embodiments, the one lookup table is addressed using the first set of the address bits to retrieve a second set of correlation values associated with the spreading sequences of the two or more information symbols. A detected symbol value for each of the two or more information symbols is based on the second set of correlation values.

In some example embodiments, the complex-valued scrambling sequence is defined by:

$$C_{long,n}(i) = c_{long,1,n}(i)\left(1 + j(-1)^i c_{long,2,n}\left(2\lfloor i/2 \rfloor\right)\right)$$

wherein:

i is a chip index starting at 0,
the block is a 4-chip symbol block,
the binary values of the scrambling sequence are eight binary values based on the binary values $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ and correspond in this example to the one set of basic scrambling bits, and
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ correspond in this example to the reduced basic scrambling bits.

## BRIEF DESCRIPTION OF THE DRAWINGS

Figure 1 illustrates a non-limiting example of a WCDMA channelization code tree from 3GPP TS 25.213;
Figure 2 illustrates a non-limiting example radio receiver that uses spreading sequence correlations;
Figure 3 illustrates how different data symbols and control symbols are spread with particular spreading sequences;
Figure 4 illustrates two 4-chip blocks for which spreading sequence correlations in a non-limiting example are calculated;
Figure 5 shows an original lookup table for a specific non-limiting detailed spreading sequence correlation example;
Figure 6 shows a first technique for reducing size of lookup table and a number of lookup table address bits in accordance with a non-limiting example embodiment;
Figure 7 shows a second technique for further reducing size of a reduced-size lookup table and a number of lookup table address bits in accordance with another non-limiting example embodiment;
Figure 8 shows a third technique for reducing a number of bits to be stored in a lookup table in accordance with a non-limiting example embodiment;
Figure 9 illustrates a non-limiting example radio receiver that uses a processor with a specific non-limiting example scrambling sequence;
Figure 10 illustrates a non-limiting example radio receiver that uses a processor with a specific non-limiting example scrambling generation bits;
Figure 11 is a portion of a radio receiver that provides spreading sequence correlations in accordance with a non-limiting example embodiment;
Figure 12 is a portion of a radio receiver that provides spreading sequence correlations in accordance with another non-limiting example embodiment;
Figure 13 is a non-limiting example of an uplink long scrambling sequence generator;
Figure 14 is a flowchart of non-limiting example procedures for generating and using correlation values;
Figure 15 is a function block diagram of a multicode detector that may be used for example in the radio receiver of Figure 2 in accordance with a non-limiting example embodiment;
Figure 16 shows a non-limiting example embodiment that uses multiple spreading sequence correlation lookup tables;
Figure 17 shows a non-limiting example embodiment that uses multiple spreading sequence correlation lookup tables and optional correlation mappers;

Figure 18 shows a non-limiting example embodiment with one spreading sequence correlation lookup table and multiple optional correlation mappers;

Figure 19 shows a non-limiting example of a spreading sequence correlation lookup table output used by an optional correlation mapper;

Figure 20 shows a non-limiting example embodiment with a spreading sequence correlation lookup table with correlation post-processing; and

Figure 21 shows another non-limiting example embodiment of a spreading sequence correlation lookup table.

## DETAILED DESCRIPTION

The following description sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not to obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, the technology can additionally be embodied within any form of non-transitory, computer-readable memory, such as solid-state memory, magnetic disk, or optical disk containing an appropriate set of computer instructions that would cause one or more processors to carry out the techniques described herein.

Thus, for example, it will be appreciated by those skilled in the art that block diagrams herein can represent conceptual views of illustrative circuitry or other functional units embodying the principles of the technology. Similarly, it will be appreciated that any flow charts, state transition diagrams, pseudocode, and the like represent various processes which may be implemented by computer program instructions that may be stored in a non-transitory, computer-readable storage medium and which when executed by one or more computers or processors cause the processes to be performed, whether or not such computer(s) or processor(s) is(are) explicitly shown.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

The functions of the various elements including functional blocks, including but not limited to those labeled or described as a computer, processor, or controller, may be provided through the use of hardware such as circuit hardware and/or hardware capable of executing software in the form of coded instructions stored on non-transitory, computer-readable medium. Thus, such functions and illustrated functional blocks are to be understood as being either hardware-implemented and/or computer-implemented, and thus machine-implemented.

The technology provides a structure associated with a set of scrambling sequences or sets of scrambling generation bits together with one or more pre-computed lookup tables to quickly obtain correlations (including auto-correlations and cross-correlations) between the spreading sequences. The technology is less computationally demanding than pre-computing and storing all possible correlations and requires only a relatively small memory. The one or more pre-computed lookup tables are stored in a memory accessible by a receiver. When the receiver receives and processes a received signal, certain basic scrambling bits (which are binary representations of the scrambling sequence or of the scrambling generation bits that generate the scrambling sequence) are used to generate an address to identify appropriate lookup table locations of the one or more lookup tables to access and retrieve desired pre-computed correlation values. Correlation values retrieved from a lookup table may be used either directly as the desired correlation, or as an index into one or more other lookup tables to obtain the desired correlation. The correlation values stored in the one or more lookup tables include cross-correlations of different time-lags between any pair of spreading sequences within a set of spreading sequences. The same table may be used to store cross-correlations of all the sequence pairs. Alternatively, a separate table may be used for each sequence pair. Ultimately, the receiver may use the obtained correlations for joint detection or other receiver processing. The following example description is in the example and non-limiting context of joint detection, but those skilled in the art understand that the technology is not limited thereto and has other applications.

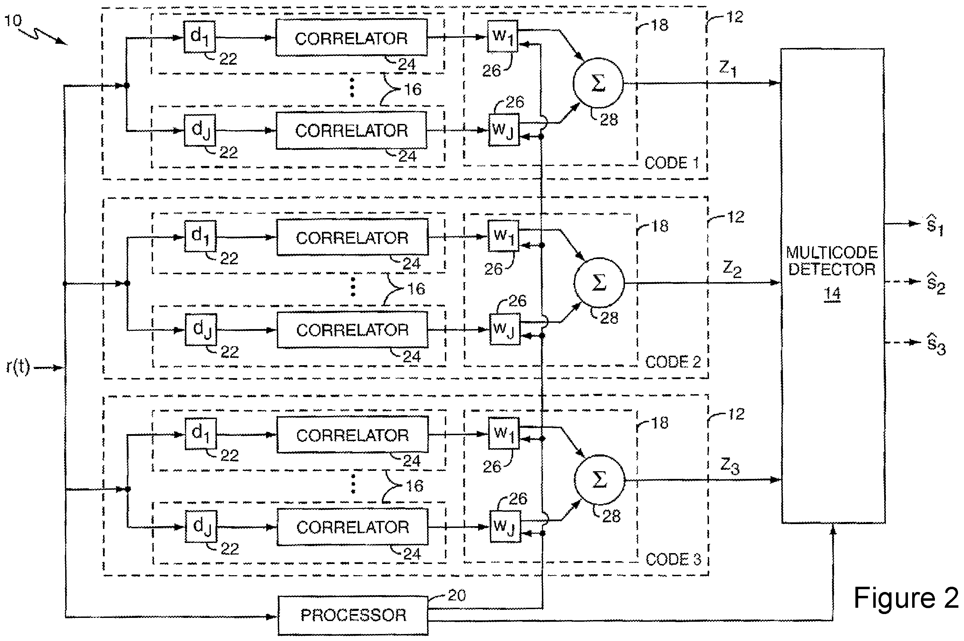

Figure 2 illustrates a block diagram of a non-limiting example multi-code receiver 10 according to one embodiment for jointly detecting signals in a composite received signal transmitted on different spreading sequences. The receiver 10 comprises a RAKE receiver 12 for each sequence to despread the composite received signal and to generate combined values corresponding to each spreading sequence, and a multi-code detector 14 for jointly detecting symbols transmitted on the code channels of interest. The RAKE receiver 12 may comprise a conventional RAKE receiver or a generalized RAKE (G-RAKE) receiver. The multi-code detector 14 may comprise a linear Minimum Mean Squared Error (MMSE) detector or maximum likelihood (ML) joint symbol detector. The example embodiment of the receiver 10 may be configured for a High Speed Packet Access (HSPA) mode, either downlink or uplink, in a WCDMA system and may be used in a base station or a mobile terminal.

Each RAKE receiver 12 comprises a plurality of RAKE fingers 16, a plurality of RAKE combiners 18, and a RAKE processor 20. Each RAKE finger 16 processes different time shifts or multi-path echoes of the received signal r(t). Typically, each RAKE finger 16 comprises a delay element 22 and a correlator or despreader 24. Delay elements 22 delay the received signal r(t) to time align the multi-path echoes processed by each RAKE finger 16. Correlators 24 correlate the delayed signals with a spreading sequence to extract the assigned multi-path echoes from the received signal r(t). Despread values from correlators 24 are combined in combiner 18. Combiner 18 typically includes weighting elements 26 and summer 28. Weighting elements 26 weight the multi-path echoes output from respective correlators 24. The weighted multi-path echoes are summed symbol-by-symbol by summer 28 to form a RAKE combined value during each symbol period. Those skilled in the art appreciate that the combining weights associated with weighting elements 26 may correspond to the conjugates of the multiplying coefficients of the multi-path echoes (RAKE) or conjugates of weights that depend on the coefficients and a noise and interference correlation matrix (G-RAKE). The combining weights are computed by the processor 20. Each RAKE combined value represents a symbol of interest or an interfering symbol. Importantly, symbols of interest also interfere with one another. In other words, when a given symbol of interest is considered, the other symbols of interest may be considered as interfering symbols. Further details of the example receiver 10 may be found in commonly-assigned, U.S. patent application publication US 2008/0267265.

So joint detection uses the correlations of the involved spreading sequences, but the correlations change with each joint detection block because the scrambling sequence for each spreading sequence changes. The following description explains how to precompute and efficiently store and access the sequence correlations needed for joint detection of 4-chip symbol blocks in a wideband code division multiple access (WCDMA) radio communication system context. But the technology is not limited to 4-chip symbol blocks or to WCDMA systems, but instead may be used in any system where sequence correlation values are stored and accessed.

For example, in WCDMA Enhanced Uplink (EUL), long scrambling codes are often used. Because they repeat only after 10 milliseconds (or 38400 chips), a large amount of memory is needed to store precomputed sequence correlations for every 4-chip block directly. To overcome this problem, the inventors identified certain scrambling sequence generation properties and exploited those properties to reduce the storage space needed to store spreading sequence correlations so that all spreading sequence correlations between any 4-chip symbol blocks can be stored in less than 10 kbytes of memory, if desired. Furthermore, if only the correlations of the spreading sequences within one 4-chip symbol block are needed, then only 512 bytes of memory or less is needed for the lookup table, if desired.

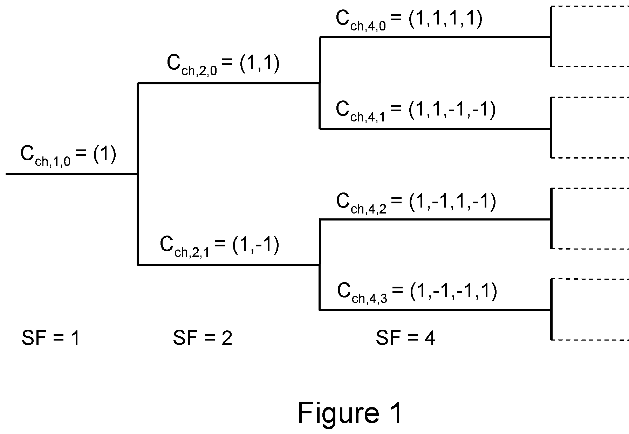

WCDMA spreading codes include orthogonal channelization sequences that are scrambled with a complex-valued scrambling sequence. For an EUL peak rate, the channelization sequences used are $C_{ch,2,1}$ and $C_{ch,4,1}$, and the control channels use sub-branches of the $C_{ch,4,0}$ channelization code tree as shown in Figure 1 and described in 3GPP TS 25.213. A QPSK scrambling sequence is comprised of a number of chips, each of which may take values 1+j, 1-j, -1+j, and -1-j, where $j^2 = -1$. Thus, a QPSK scrambling sequence of length 4-chips has the form $(u_1+jv_1, u_2+jv_2, u_3+jv_3,$ and $u_4+jv_4)$, where each $u_i$ and $v_i$, may take the value +1 or -1. So in general, 8 binary values, or bits, may be used to represent a 4-chip long QPSK scrambling sequence.

However, the complex-valued long scrambling code used in WCDMA UL as specified in 3GPP TS 25.213, section 4.3.2 has the form:

$$C_{long,l}(i) = c_{long,1,l}(i)\left(1 + j(-1)^i c_{long,2,l}\left(2\lfloor i/2\rfloor\right)\right) \qquad (1)$$

where *l* is the long scrambling code number, $\lfloor\rfloor$ denotes rounding to the nearest lower integer, and where $c_{long,1,l}(i)$ and $c_{long,2,l}(i)$ are binary-valued scrambling sequences taking values {+1, -1}. Each individual scrambling chip is defined by two bits: the values of $c_{long,1,l}(i)$ and $c_{long,2,l}(2\lfloor i/2\rfloor)$ (with an index *i*). However, the inventors observed that since the same $c_{long,2,l}(i)$ value is used for two consecutive scrambling chips, (indexes $i = 2k$ and $i = 2k+1$, where *k* is an integer), the value of a pair of scrambling chips $C_{long,l}(2*k)$ and $C_{long,l}(2*k+1)$ is completely determined by only three bits, i.e., the values $c_{long,1,l}(2*k)$, $c_{long,1,l}(2*k+1)$, and $c_{long,2,l}(2*k)$. As a result, the scrambling sequence in a block of four chips is completely determined by 6 bits, in contrast to the 8 bits required to represent a general QPSK scrambling sequence lacking the special structure in equation (1). The real and imaginary parts of the chips of the scrambling code described by equation (1) can be separately expressed as:

$$\operatorname{real}\!\left(C_{long,l}(i)\right) = c_{long,1,l}(i) \qquad (1a)$$

$$\operatorname{imag}\!\left(C_{long,l}(i)\right) = \left(-1\right)^{i} c_{long,1,l}(i)\, c_{long,2,l}\!\left(2\lfloor i/2\rfloor\right) \qquad (1b)$$

and, thus, $c_{long,1,l}(2*k)$, $c_{long,1,l}(2*k+1)$, and $c_{long,2,1}(2*k)$ can be expressed as functions of $\operatorname{real}(C_{long,l}(i))$ and $\operatorname{imag}(C_{long,l}(i))$:

$$c_{long,1,1}(2k) = \operatorname{real}\!\left(C_{long,1}(2k)\right) \qquad (1c)$$

$$c_{long,1,1}(2k+1) = \operatorname{real}\!\left(C_{long,1}(2k+1)\right) \qquad (1d)$$

$$c_{long,2,1}(2k) = \operatorname{imag}\!\left(C_{long,1}(2k)\right)\!\big/\operatorname{real}\!\left(C_{long,1}(2k)\right) \qquad (1e)$$

This way, the value of a pair of scrambling chips $C_{long,l}(2*k)$ and $C_{long,l}(2*k+1)$ can also be described as completely determined by the real and imaginary part of $C_{long,l}(2*k)$ and the real part of $C_{long,l}(2*k+1)$. The imaginary part of $C_{long,l}(2*k+1)$ is determined by the real and imaginary parts of $C_{long,l}(2*k)$ and the real part of $C_{long,l}(2*k+1)$ as:

$$\operatorname{imag}\!\left(C_{long,1}(2k+1)\right) = -\operatorname{real}\!\left(C_{long,1}(2k+1)\right)\operatorname{imag}\!\left(C_{long,1}(2k)\right)\!\big/\operatorname{real}\!\left(C_{long,1}(2k)\right) \qquad (1f).$$

So in a pair of scrambling chips, only the real and imaginary part of the first chip (2 bits) together with the real part of the second chip (1 bit) are required to completely determine the values of the chip pair. A benefit from this technique is that only 6 bits are required to determine the scrambling sequence in a block of 4 chips. Although UL short scrambling sequences are much shorter than the long sequences, i.e., only 256 chips, both long and short scrambling sequences benefit from the technology described in this application.

In WCDMA, symbols are spread with spreading sequences that are composed of channelization sequences and scrambling sequences. A spreading sequence may be expressed as:

$$S_{SF,k}(i) = C_{ch,SF,k}(i) * C_{long,l}(i) \qquad (2)$$

where $C_{ch,SF,k}(i)$ is a channelization sequence $k$ of spreading factor $SF$, and $S_{SF,k}(i)$ is the corresponding spreading sequence $k$ of spreading factor $SF$, and $i$ is the chip index.

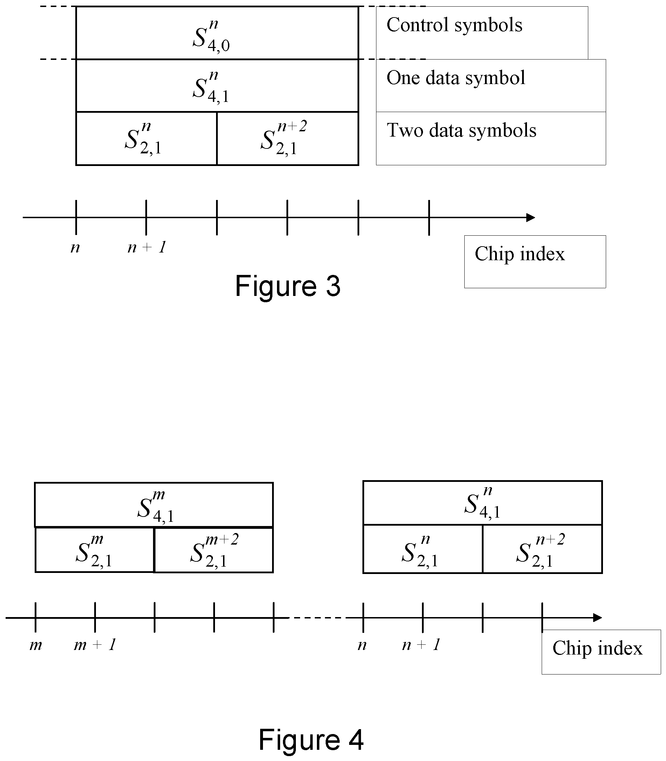

The spreading sequences of spreading factor 2 and 4 used in a 4-chip block include: $S_{4,1}$ and $S_{2,1}$ for data, and $S_{4,0}$ (which is the root for control channel spreading sequences of spreading factors higher than 4) for control information, where $n$ here denotes the chip index of the first chip of the spreading sequence. Figure 3 illustrates how SF2 and SF4 data symbols and SF > 4 control symbols are spread with spreading sequences $S_{2,1}^{n}$, $S_{2,1}^{n+2}$, $S_{4,1}^{n}$ and sub-branches of $S_{4,0}^{n}$ in a 4-chip symbol block. The data symbols in one or more symbol blocks may be jointly detected to alleviate the inter-symbol interference (ISI) among them. Since the ISI between two symbols is characterized by the cross-correlations between their spreading sequences, spreading sequence cross-correlations are essential for the receiver to perform joint detection.

Expressed as row vectors, the data spreading sequences are:

$$S_{2,1}^{n} = \begin{bmatrix} S_{2,1}(n) & S_{2,1}(n+1) \end{bmatrix}$$

$$S_{2,1}^{n+2} = \begin{bmatrix} S_{2,1}(n+2) & S_{2,1}(n+3) \end{bmatrix}$$

$$S_{4,1}^{n} = \begin{bmatrix} S_{4,1}(n) & S_{4,1}(n+1) & S_{4,1}(n+2) & S_{4,1}(n+3) \end{bmatrix}$$

where $n = 4*k$ and $k$ is an integer.

To make the calculations in 4-chip blocks easier to follow, the spreading sequences of spreading factor 2 may be expressed as being of spreading factor 4 but with zeros inserted:

$$S_{2,1}^{n} = \begin{bmatrix} S_{2,1}(n) & S_{2,1}(n+1) & 0 & 0 \end{bmatrix}$$

$$S_{2,1}^{n+2} = \begin{bmatrix} 0 & 0 & S_{2,1}(n+2) & S_{2,1}(n+3) \end{bmatrix}$$

The value of the SF4 data spreading sequence $S_{4,1}^{n}$ is completely determined by channelization sequence $C_{ch,4,1}$ and the 6 bits $c_{long,1,I}(n)$, $c_{long,1,I}(n+1)$, $c_{long,1,I}(n+2)$, $c_{long,1,I}(n+3)$, $c_{long,2,I}(n)$ and $c_{long,2,I}(n+2)$ of 8 basic scrambling bits. As will be described in more detail below, this structure is used to manipulate one or more of the scrambling sequences in a way that reduces a number of bits in constructing one of the example lookup tables that store spreading sequence correlation values and in an address used to address the lookup table. Significantly, the reduced number of bits included in the address is less than a number of binary values in the scrambling sequence.

Similarly, for the SF2 data spreading sequences, the values of the spreading sequence are determined by the channelization code $C_{ch,2,1}$ and by 3 bits of 4 basic scrambling bits. $S_{2,1}^{n}$ is determined by $c_{long,1,I}(n)$, $c_{long,1,I}(n+1)$, and $c_{long,2,I}(n)$. $S_{2,1}^{n+2}$ is determined by $c_{long,1,I}(n+2)$, $c_{long,1,I}(n+3)$, and $c_{long,2,I}(n+2)$.

When multiple symbol blocks are included in joint detection, cross-correlations between spreading sequences from different symbol blocks are needed. The two symbol blocks are denoted by the superscripts $m$ and $n$. Although the two symbol blocks may correspond to different scrambling sequences and different users, as well as different 4-chip symbol blocks of the signal from the same user, for notational simplicity, it is assumed they correspond to different 4-chip symbol blocks of the same user. Figure 4 illustrates a pair of 4-chip symbol blocks for which the spreading sequence correlations in the example are calculated.

The spreading sequence correlations are:

$$\left(S_{4,1}^{m} * S_{4,1}^{n}\right)(t) = \sum_{k=\max(0,-t)}^{\min(3,3-t)} S_{4,1}^{*}(m+k)S_{4,1}(n+k+t)$$

$$\left(S_{4,1}^{m} * S_{2,1}^{n}\right)(t) = \sum_{k=\max(0,-t)}^{\min(3,1-t)} S_{4,1}^{*}(m+k)S_{2,1}(n+k+t)$$

$$\left(S_{4,1}^{m} * S_{2,1}^{n+2}\right)(t) = \sum_{k=\max(0,2-t)}^{\min(3,3-t)} S_{4,1}^{*}(m+k)S_{2,1}(n+k+t)$$

$$\left(S_{2,1}^{m} * S_{2,1}^{n}\right)(t) = \sum_{k=\max(0,-t)}^{\min(1,1-t)} S_{2,1}^{*}(m+k)S_{2,1}(n+k+t)$$

$$\left(S_{2,1}^{m} * S_{2,1}^{n+2}\right)(t) = \sum_{k=\max(0,2-t)}^{\min(1,3-t)} S_{2,1}^{*}(m+k)S_{2,1}(n+k+t)$$

$$\left(S_{2,1}^{m+2} * S_{2,1}^{n+2}\right)(t) = \sum_{k=\max(2,2-t)}^{\min(3,3-t)} S_{2,1}^{*}(m+k)S_{2,1}(n+k+t)$$

and so on. The min and max functions are used to keep the correlation calculations within the spreading sequence length.

The spreading sequence correlations are stored in one or more lookup tables in one or more memories. Although it is understood that the correlations may be stored in a variety of ways in memory, for explanation and illustration purposes only, each row in a lookup table stores the correlation value of two spreading sequences. The number of bits needed for one row, i.e., the memory space needed in this example table configuration, is now examined using the correlation of two SF4 sequences. As shown above, the correlations are sums, and for the spreading sequences of length 4, the correlation values are:

$$\left(S_{4,1}^{m} * S_{4,1}^{n}\right)(3) = S_{4,1}^{*}(m)S_{4,1}(n+3)$$

$$\left(S_{4,1}^{m} * S_{4,1}^{n}\right)(2) = S_{4,1}^{*}(m)S_{4,1}(n+2) + S_{4,1}^{*}(m+1)S_{4,1}(n+3)$$

$$\left(S_{4,1}^{m} * S_{4,1}^{n}\right)(1) = S_{4,1}^{*}(m)S_{4,1}(n+1) + S_{4,1}^{*}(m+1)S_{4,1}(n+2) + S_{4,1}^{*}(m+2)S_{4,1}(n+3)$$

$$\left(S_{4,1}^{m} * S_{4,1}^{n}\right)(0) = S_{4,1}^{*}(m)S_{4,1}(n) + S_{4,1}^{*}(m+1)S_{4,1}(n+1) + S_{4,1}^{*}(m+2)S_{4,1}(n+2) + S_{4,1}^{*}(m+3)S_{4,1}(n+3)$$

and so on.

Each complex-valued scrambling chip may be understood as a complex symbol with amplitude $\sqrt{2}$ and phase 45 degrees + 90 * n degrees, (where $n$ is an integer). Since the channelization codes take the values {+1, -1}, a chip of a spreading code can be seen as such a complex symbol. The result of the multiplication of two such chips is a new complex symbol with amplitude 2 and phase 90 * n degrees taking the values {+2, +2j, -2, -2j} where $j^2 = -1$. So each term in the sum in the correlation expressions can take one of these four values. For $\left(S_{4,1}^{m} * S_{4,1}^{n}\right)(-3)$ and $\left(S_{4,1}^{m} * S_{4,1}^{n}\right)(3)$, there is only one term in the sum, so these correlations can take four values and can thus be represented by 2 bits each.

A sum of two of these terms can take any of 9 unique values {0, +2+2j, +2-2j, -2+2j, -2-2j, +4, +4j, -4, -4j}, so the sum can be represented by 4 bits (4 bits can take $2^4 = 16$ values). Thus, $\left(S_{4,1}^{m} * S_{4,1}^{n}\right)(-2)$ and $\left(S_{4,1}^{m} * S_{4,1}^{n}\right)(2)$ can be represented by 4 bits each. In the same way, a sum of three terms can take 16 unique values and can be represented by 4 bits, and a sum of four terms can take 25 unique values and can be represented by 5 bits. Thus, the number of bits required to store $\left(S_{4,1}^{m} * S_{4,1}^{n}\right)(-3)$ and $\left(S_{4,1}^{m} * S_{4,1}^{n}\right)(3)$ is 2 bits each, $\left(S_{4,1}^{m} * S_{4,1}^{n}\right)(-2)$, $\left(S_{4,1}^{m} * S_{4,1}^{n}\right)(2)$, $\left(S_{4,1}^{m} * S_{4,1}^{n}\right)(-1)$ and $\left(S_{4,1}^{m} * S_{4,1}^{n}\right)(1)$ is 4 bits each, and $\left(S_{4,1}^{m} * S_{4,1}^{n}\right)(0)$ is 5 bits.

So to store the correlation values of two SF4 spreading codes, a total of 25 bits is required. If a typical lookup table is used, it is more advantageous to use 32 bits, because then each row in the table is 32 bits or 4 bytes offset to the next row to provide simple addressing into such a table. Take the row number (starting from 0) and multiply it by 32 which is readily done by bit-shifting it 5 steps to the left. It is preferred to represent the correlations using 4 bits, except $\left(S_{4,1}^{m} * S_{4,1}^{n}\right)(0)$ which uses 8 bits.

For correlations of one SF4 code with one SF2 code, the correlation values take 4, 9, 9, 9, and 4 unique values for three different correlation lags. This can be represented by 2, 4, 4, 4, and 2 bits, respectively, and a table of these correlations would thus require 16 bits in each row. For correlations of two SF2 codes, the correlation values take 4, 9, and 4 unique values for the three different correlation lags. These values may be represented by 2, 4, and 2 bits so that each row holds 8 bits.

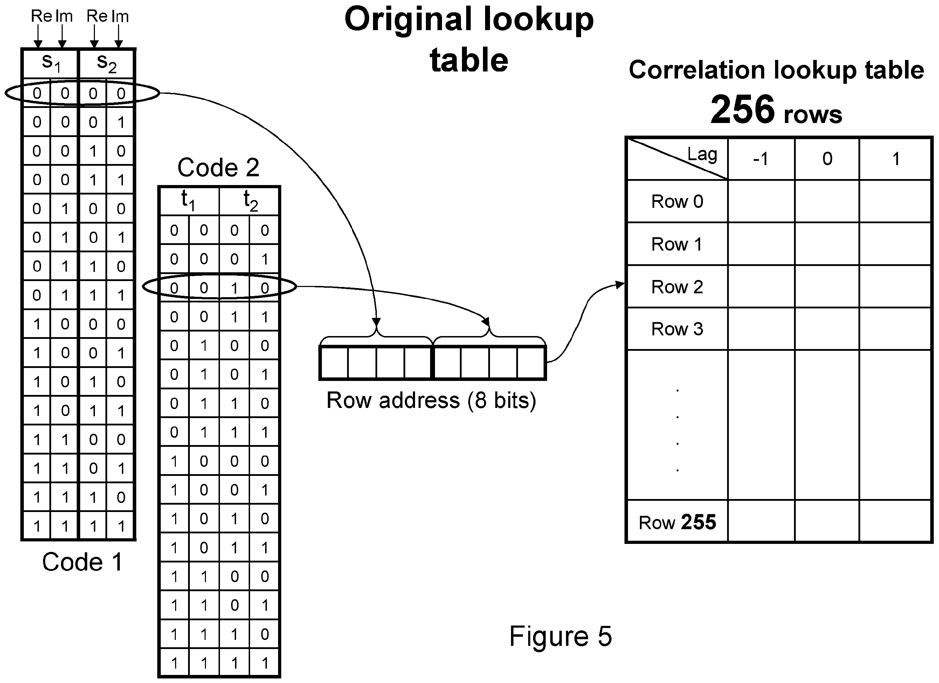

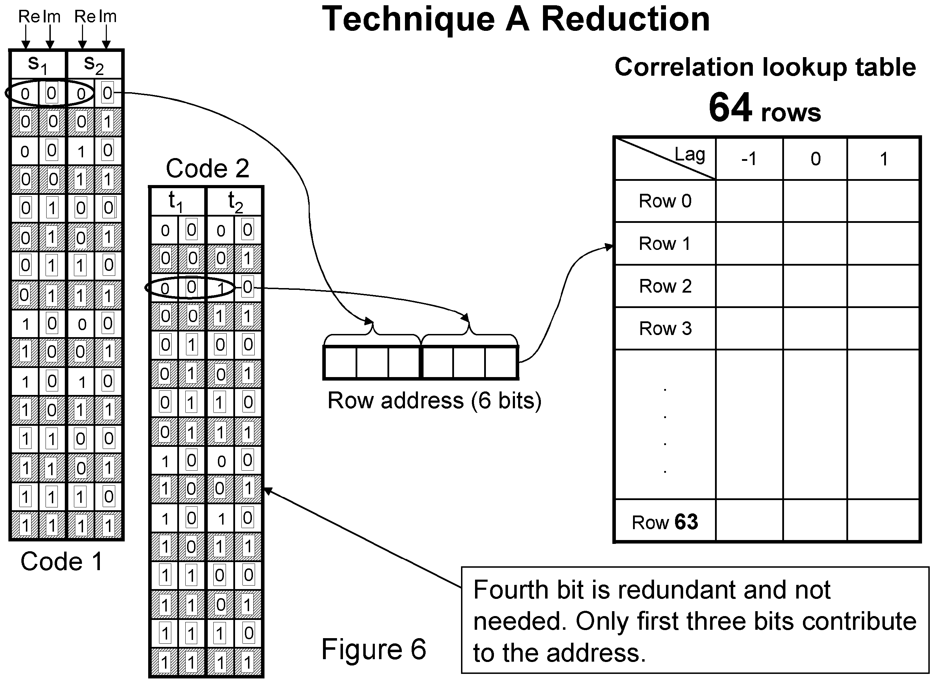

In terms of the number of rows in a lookup table, because 6 bits determine the scrambling of one SF4 spreading code as described above in conjunction with equation (1), a SF4xSF4 table of all correlations of two SF4 spreading codes includes $2^{6+6}$ = 4096 rows. With 32 bits in each row, the table of size is 4096 * 32 bits = 16 kbytes instead of $2^{8+8}$ = 65536 rows $\times$ 32 bits = 256 kbytes. In other words, the storage requirements are reduced 16 times. This simplified table structure is referred to as example technique A. Example technique A is described further below in conjuction with Figures 5 and 6.

The following specific examples help illustrate some of the advantageous efficiencies of the technology for example technique A. Figure 5 shows an original lookup table for a specific non-limiting detailed spreading sequence correlation example with two spreading codes 1 and 2 (the term code is used in this example rather than sequence). Code 1 is represented by $s_1$ and $s_2$ which are QPSK symbols in the complex plane, each represented by 2 bits, one bit for the real part and one bit for the imaginary part. So there are $2^4$=16 possible sequences for code 1. Code 2 is represented by $t_1$ and $t_2$ which are QPSK symbols, each represented by 2 bits. So there are $2^4$=16 possible sequences for code 2. Each of code 1 and code 2 is represented by 4 bits. The correlation of Code 1 with Code 2 is stored in a lookup table. The number of table rows correspond to the number of possible (Code 1 - Code 2) combinations. In this example, 16 $\times$ 16 = 256 rows. So the row address (RA) is 8 bits ($2^8$=256). The first four bits of the row address come from Code 1, and the last four bits come from Code 2. The columns of the lookup table correspond to the different delays or lags at which the correlation is computed. This example shows three columns lags -1, 0, and 1. The lookup table size reduction now described may be done using one or more of three example techniques A, B, and C. The techniques may be used alone or in any combination among them depending on the code structure and/or the implementation.

Figure 6 shows a first technique for reducing a number of lookup table address bits in accordance with example technique A from a row address size of 8 bits as in Figure 5 to 6 bits in Figure 6 by exploiting the characteristics of equation (1). As described above, only the real and imaginary parts of $s_1$ and the real part of $s_2$ are required to completely determine the values of Code 1, and the real and imaginary parts of $t_1$ and the real part of $t_2$ are required to completely determine the values of Code 2. Hence, the imaginary part of $s_2$ and $t_2$ are redundant and not needed. Only the first three bits in the row contribute to the address. So technique A removes the redundant rows with the following scrambling code constraint: $Im(s_2) = 1$, which means there are 8 possible sequences for Code 1 (instead of 16). Therefore, Code 1 only needs 3 bits instead of 4 (i.e., $2^3$=8). Similarly, removing rows for which $Im(t_2)$ = limplies that only 8 sequences for Code 2 are needed (instead of 16). Code 2 needs 3 bits only instead of 4. The number of table rows is 8 $\times$ 8 = 64 rows. Thus, the row address (RA) in this example is 6 bits instead of 8, which means that the lookup table size is reduced to 64 / 256 or ¼ of its initial size. In more realistic cases, the size reduction is even larger, e.g., 1/16.

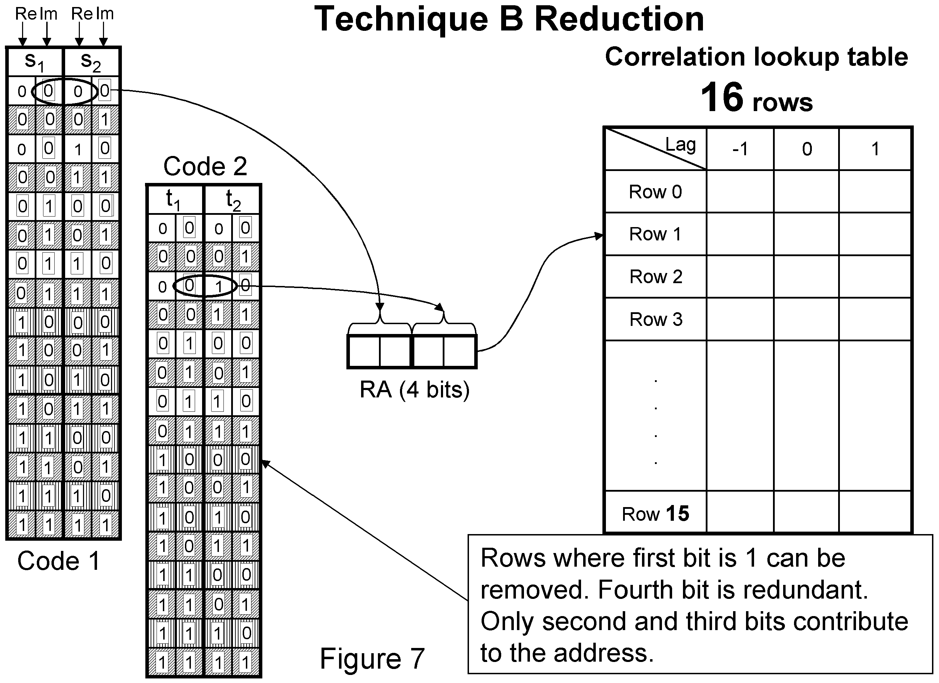

Figure 7 shows a second technique for further reducing a number of lookup table bits and accordingly address bits in accordance with the non-limiting example technique B. The real part of complex symbols $s_1$ and $t_1$ can be $\pm 1$ with [1, -1] binary representation or 0/1 with [0, 1] binary representation, and these real parts of $s_1$ and $t_1$ are here denoted "anchor bits". Code 1 is then multiplied by $Re(s_1)$ - this corresponds to an exclusive OR operation if the binary values are 0 and 1 or a multiplication operation if the binary values are +1 and -1, - to produce a new set $s'_1$ and $s'_2$. Similarly, Code 2 is multiplied by $Re(t_1)$ to produce a new set $t'_1$ and $t'_2$. Because $Re(s'_1)$=+1 and $Re(t'_1)$=+1, Code 1 is determined by $Im(s'_1)$ and $Re(s'_2)$, which means there are 4 possible sequences for Code 1 (represented by two bits instead of 3). (Note: in a case of using technique B alone, $Im(s'_2)$ is also needed). Similarly, Code 2 is determined by $Im(t'_2)$ and $Re(t'_2)$ with 4 possible sequences for Code 2 (represented by two bits instead of 3).

Figure 7 shows that for certain row entries, the first bit is always 1, and the fourth bit is redundant as described above. Thus, only the second and third bits contribute to the row address, and the entries where the first bit is 1 can be removed. The number of table rows is 4 $\times$ 4 = 16 rows, and the row address (RA) is 4 bits. After looking up the table entry (Code 1, Code 2, Lag), the required correlation bits are recovered by multiplying by the product of the "anchor bits" $Re(s_1) \times Re(t_1)$. This removes the effect of the earlier imposed exclusive OR operations described above. The technique A and B size reduction for this example is 16 / 256 or just 6.25% of the original table size. In more realistic cases, the size reduction is even larger.

Another example technique B discovered by the inventors is to include rows only for those cases where the first bit in each of the two scrambling generation sequences is equal to 1 for $\pm 1$ representation. For 0/1 representation, the first rows with value 0 are kept. As described above, the 8 scrambling generation bits for the first symbol block of 4 chips in Figure 4 are determined by 6 of them ($c_{long,1,I}(m)$, $c_{long,1,I}(m+1)$, $c_{long,1,I}(m+2)$, $c_{long,1,I}(m+3)$, $c_{long,2,I}(m)$, $c_{long,2,I}(m+2)$). Setting the first bit to one produces (1, $c_{long,1,I}(m+1)$, $c_{long,1,I}(m+2)$, $c_{long,1,I}(m+3)$, $c_{long,2,I}(m)$, $c_{long,2,I}(m+2)$). Setting the first bit of the 6 bits of the 8 scrambling generation bits of the second symbol block of 4 chips to one produces (1, $c_{long,1,I}(n+1)$, $c_{long,1,I}(n+2)$, $c_{long,1,I}(n+3)$, $c_{long,2,1}(n)$, $c_{long,2,I}(n+2)$). 2^10=1024 rows are needed. The correlation values with ($c_{long,1,I}(m)$, $c_{long,1,I}(m+1)$, $c_{long,1,I}(m+2)$, $c_{long,1,I}(m+3)$, $c_{long,2,I}(m)$, $c_{long,2,I}(m+2)$) and ($c_{long,1,I}(n)$, $c_{long,1,I}(n+1)$, $c_{long,1,I}(n+2)$, $c_{long,1,I}(n+3)$, $c_{long,2,I}(n)$, $c_{long,2,I}(n+2)$) of the first and second chip symbol blocks are identical to those with (1, $c_{long,1,I}(m)c_{long,1,I}(m+1)$, $c_{long,1,I}(m)c_{long,1,I}(m+2)$, $c_{long,1,I}(m)c_{long,1,I}(m+3)$, $c_{long,1,I}(m)c_{long,2,I}(m)$, $c_{long,1,I}(m)c_{long,2,I}(m+2)$) and (1, $c_{long,1,I}(n)c_{long,1,I}(n+1)$, $c_{long,1,I}(n)c_{long,1,I}(n+2)$, $c_{long,1,I}(n)c_{long,1,I(n+2)}$, $c_{long,1,I}(n)c_{long,1,I}(n+3)$, $c_{long,1,I}(n)c_{long,2,I}(n)$, $c_{long,1,I}(n)c_{long,2,I}(n+2)$) multiplied by $c_{long,1,I}(m)$ $c_{long,1,I}(n)$.

For the correlation of two SF2 codes, only 3 of the 4 scrambling generation bits are needed for each code. In total, there will be $2^6$ = 64 rows in such a SF2xSF2 table, and for the correlation of one SF4 code with one SF2 code, 6+3 = 9 scrambling generation bits determine that the number of rows in the table will be $2^9$ = 512. For these correlations, there is less of a need to pack the table more compactly as there might be for the SF4xSF4 table above.

However, one or more of the techniques described above may be used to reduce the number of lookup table rows for the correlations between two SF2 codes or correlations between one SF4 code and one SF2 code.

The inventors further observed that the correlations for $\left(S_{4,1}^n * S_{4,1}^m\right)(t) = \left(S_{4,1}^m * S_{4,1}^n\right)^*(-t)$, where $m \neq n$ are stored twice in such a table according to example technique A. Accordingly, the amount of memory needed for correlation storage may be reduced by almost half. There are $2^6$ * (26 - 1) / 2 = 2016 such rows. So all correlations where $m > n$ can be removed from the table, and the resulting table has $2^6$ * ($2^6$ + 1) / 2 = 2080 rows, and the size is 2080 * 32 bits = 8320 bytes < 8.2 kbytes (1 kbyte = 1024 bytes). This table structure is referred to as example technique C and may be realized by storing the correlations as an upper-packed table/matrix where the upper triangular part, including the diagonal, is stored column by column. However, indexing or addressing such a table may be somewhat more complicated.

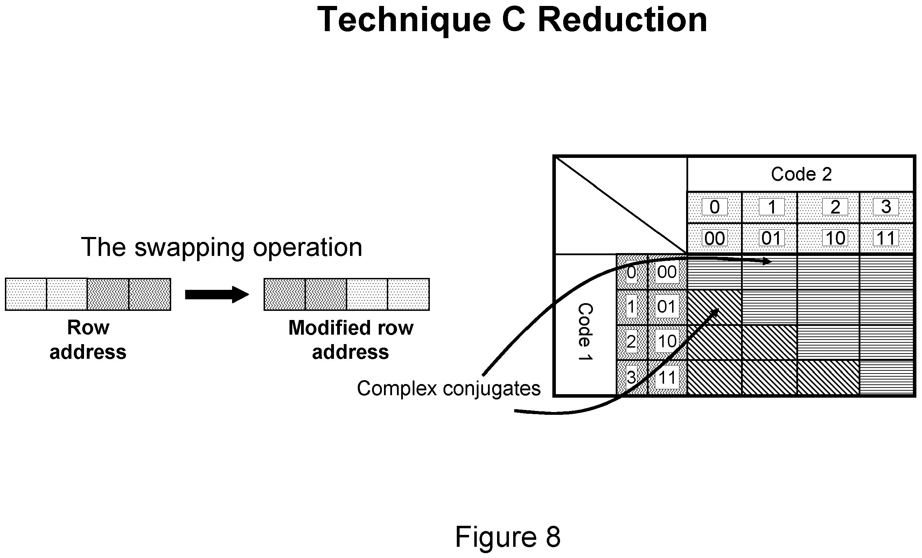

Figure 8 shows this third technique for reducing a number of bits to be stored in a lookup table in accordance with the non-limiting example technique C. Techniques A, B, and C may be used alone or in any combinations. Like techniques A and B, technique C employs an "excluding similarities" approach. As observed in technique B in combination with technique A, Code 1 is fully determined by the second and third bits, and Code 2 is fully determined by the second and third bits. So there are four possibilities for Code 1 and four possibilities for Code 2 resulting in a lookup table with 16 rows as shown in Figure 7. Looking for similarities between the rows, the inventors swapped the values of Code 1 and Code 2, and discovered that the value of the correlation between them is the same except for a complex conjugation. As a result, they determined that all 16 values need not be stored in the lookup table. For example, all values in the lower triangle (diagonal lines) are the complex conjugates of all the values in the upper triangle (horizontal lines). So the lookup table really only needs to store 10 correlation values (the upper triangle of horizontal lines) or a simpler representation that is used to invoke a correlation mapper. A simpler representation means storing addresses (instead of correlation values) and using these addresses to look into another table that contains those 10 correlation values. If the decimal representation of the first two bits of the row address (shown as dotted background) is greater than or equal to that of the last two bits (shown as vertical swiggly line background), then that decimal representation is used to compute an address (using equation (2) set forth below) to read one of the lookup table entries (the upper triangle of horizontal lines). If the decimal representation of the first two bits of the row address is less than that of the last two bits, that points to the lower triangle of diagonal lines. In this case, the first two bits are swapped with the last two bits, as shown, and decimal representations of the resulting bits are used to read one of the lookup table entries, where also the time lag $-t$ is used to find the correct correlation value in the entry instead of the time lag $t$. A complex conjugate of the read value is taken to obtain the required correlation value. Technique C is preferably performed before the last anchor bit multiplication of technique B described above. Ultimately, the cumulative effect of using techniques A, B, and C reduces the lookup table size to 10 / 256 or just 3.9% of the original table size. Thus, these examples have shown that the storage savings with any and all of the above techniques is profound.

**EXAMPLE ADDRESSING OF A SF4XSF4 TABLE.** Recall that the value of the spreading code $S_{4,1}^n$ is completely determined by channelization code $C_{ch,4,1}$ and the 6 bits $c_{long,1,l}(n)$, $c_{long,1,l}(n+1)$, $c_{long,1,l}(n+2)$, $c_{long,1,l}(n+3)$, $c_{long,2,l}(n)$ and $c_{long,2,l}(n+2)$ of the 8 scrambling generation bits. To identify the correct row in a lookup table for a particular spreading code correlation, the following example may be used:

$a_m$ = decimal value of the 6 of the 8 scrambling generation bits for $S_{4,1}^m$.

$a_n$ = decimal value of the 6 of the 8 scrambling generation bits for $S_{4,1}^n$.

The address into the table of technique A would be

$$row = a_{m} + a_n 2^6 \qquad (2)$$

The address into the table of technique C would be

$$row = a_m + a_n(a_n+1)/2 \qquad (3)$$

if $a_n \geq a_m$. If $a_n < a_m$, the relation $\left(S_{4,1}^n * S_{4,1}^m\right)(t) = \left(S_{4,1}^m * S_{4,1}^n\right)^*(-t)$ would be utilized by exchanging $a_m$ and $a_n$ and using these exchanged values to compute the address and by using the time lag *-t* instead of *t* to find the correlation value. The complex conjugate of the value found using the look-up table would then be used as the correlation value.

The rows in the example technique C table correspond to the address bit values $a_m$ and $a_n$ as illustrated in Table 1 below.

Table 1 Illustration of how the address bit values $a_m$ and $a_n$ map to table row numbers in technique C tables.

| row | $a_m$ | $a_n$ |
| --- | --- | --- |
| 0 | 0 | 0 |
| 1 | 0 | 1 |
| 2 | 1 | 1 |
| 3 | 0 | 2 |
| 4 | 1 | 2 |
| 5 | 2 | 2 |
| Etc. | | |

For example technique B, the correct row in the lookup table may be located using the following example:

$a_m$ = decimal value of the 5 bits sequence for $S_{4,1}^m$, $(c_{long,1,l}(m)c_{long,1,l}(m+1),$

$$c_{long,1,l}(m)c_{long,1,l}(m+2), \; c_{long,1,l}(m)c_{long,1,l}(m+3), \; c_{long,1,l}(m)c_{long,2,l}(m),$$

$$c_{long,1,l}(m)c_{long,2,l}(m+2))$$

$a_n$ = decimal value of the 5 bits sequence for $S_{4,1}^n$, $(c_{long,1,l}(n)c_{long,1,l}(n+1), \; c_{long,1,l}(n)c_{long,1,l}(n+2), c_{long,1,l}(n)c_{long,1,l}(n+3), \; c_{long,1,l}(n)c_{long,2,l}(n), \; c_{long,1,l}(n)c_{long,2,l}(n+2))$ The address into the table of technique A would be *row* = $a_m + a_n 2^5$. As described earlier, the correlation values read out from the table will need to be multiplied by the product of $c_{long,1,l}(m)$ $c_{long,1,l}(n)$.

Furthermore, example technique B can be combined with example technique C to achieve further reduction in the number of rows. With such a combination, the number of rows needed is only $2^5 * (2^5 + 1) / 2 = 528$.

In any of the example SF4xSF4 table realizations, each row takes 32 bits, so the variable "row" simply needs a left-shift of 5 bit positions to formulate the address to the 32 bits that contain the desired correlation.

**NUMBER OF TABLES.** By examining the correlation expressions and understanding that the 6 of the 8 scrambling generation bits completely determine the spreading code (together with the channelization code), the correlation of all two SF2 codes can be looked up in only one SF2xSF2 table. Similarly, only one SF4xSF2 table is needed to store all correlations of $S_{4,1}^m$ with any of the SF2 codes and only one SF4xSF4 table is needed for the correlation of $S_{4,1}^m$ with $S_{4,1}^n$.

Assuming technique C is used in combination with technique A, the total memory required for storage of the lookup tables is:

SF2xSF2: 64 rows of 8 bits: 64 bytes
SF4xSF2: 512 rows of 16 bits: 8192 bits = 1 kbyte
SF4xSF4: 2080 rows of 32 bits = 8320 bytes < 8.2 kbytes

In a receiver that employs interference cancellation, the control channels can be cancelled before joint detection. However, if control channels are also handled by the joint detection algorithm and the code correlations for the control channel spreading codes are needed, two additional tables for SF4xSF4 are preferably employed: one for $S_{4,0}^m$ correlated with $S_{4,0}^{n}$ and one for $S_{4,0}^{m}$ correlated with $S_{4,1}^{n}$. Also another SF4xSF2 table is preferably employed for correlations of $S_{4,0}^{m}$ with the SF2 codes. $S_{2,1}^{n}$ **ONLY INTRA-BLOCK CODE CORRELATIONS.** If only symbols within one symbol block are jointly detected, only the correlations between the three data spreading codes $S_{4,1}^{n}$, $S_{2,1}^{n}$ and $S_{2,1}^{n+2}$ within one 4-chip symbol block are required, e.g., by a joint detection algorithm, a small lookup table can be used. Since $S_{4,1}^{n}$, and $S_{2,1}^{n+2}$ are orthogonal at zero lag correlation, those correlation values do not need storage. Furthermore, the auto-correlations are Hermitian functions, and as a result, only the autocorrelations for positive lags need to be stored because the autocorrelations at negative lags are simply the complex conjugates of the positive lag autocorrelation values. As in the more general case of inter-block correlations described above, separate tables may be used for the SF4xSF4, SF4xSF2 and SF2xSF2 cases. However, the final table in the intra-block correlation case may be so small that these optimizations, although they may be used, may not be justified. Instead, only one lookup table for all correlation values is described.

The realization of the three spreading codes $S_{4,1}^{n}$, $S_{2,1}^{n}$ and $S_{2,1}^{n+2}$ in a 4-chip symbol block is determined by 6 of the 8 scrambling generation bits. So the final lookup table will have $2^6 = 64$ rows. The autocorrelation $\left(S_{4,1}^{n} * S_{4,1}^{n}\right)(t)$ needs storage of 3 correlations which take 4, 9, and 16 unique values. $\left(S_{2,1}^{n} * S_{2,1}^{n}\right)(t)$ and $\left(S_{2,1}^{n+2} * S_{2,1}^{n+2}\right)(t)$ each have only one correlation value to store, and that correlation can take 4 unique values. The cross-correlations $\left(S_{4,1}^{n} * S_{2,1}^{n}\right)(t)$ and $\left(S_{4,1}^{n} * S_{2,1}^{n+2}\right)(t)$ need storage of 4 correlations, which take 4, 9, 9, and 4 unique values. $\left(S_{2,1}^{n} * S_{2,1}^{n+2}\right)(t)$ needs storage of 3 correlations, which take 4, 9, and 4 unique values.

Since the final table is quite small, 4 bits may be used to store each correlation value, even though fewer bits can be used to represent the unique values of the correlations at some lags. So each row in the table stores 16 correlations, with 4 bits each. If the table has 64 rows, then the final table size is 512 bytes.

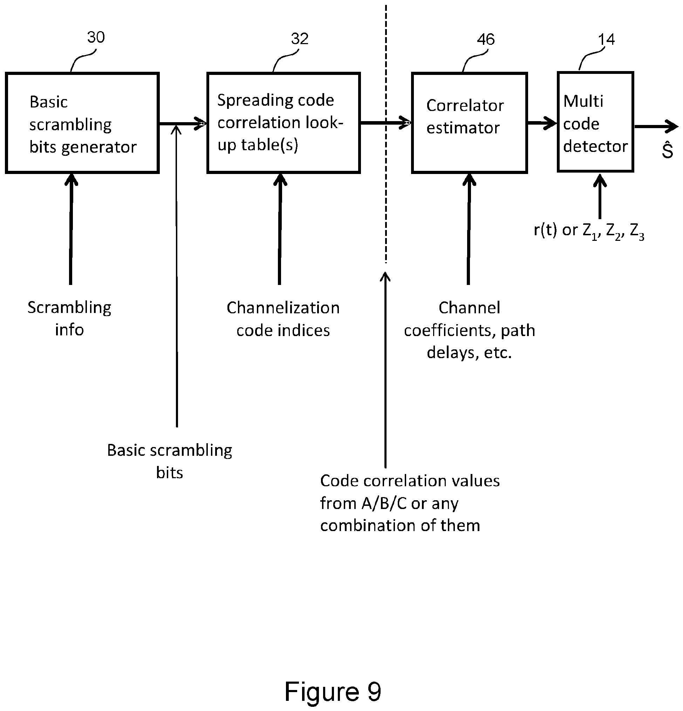

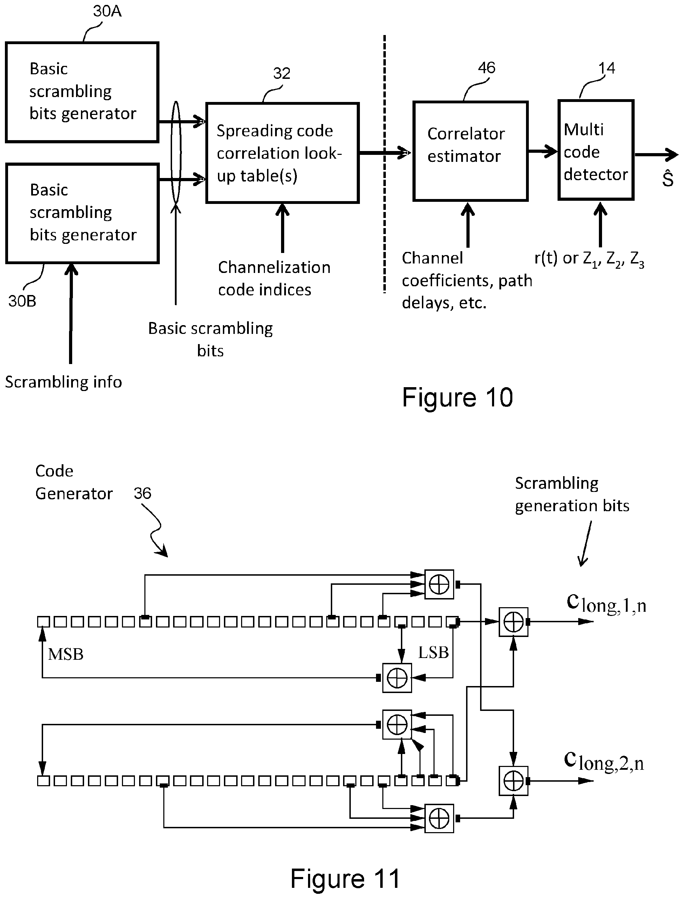

Figure 9 is a portion of a radio receiver that provides spreading sequence correlations in accordance with a non-limiting example embodiment in which the technology described in this application may be employed. A basic scrambling bitsgenerator 30 receives scrambling information, e.g., a scrambling code number, and generates the basic scrambling bits, in form of either scrambling generation bits or scrambling sequence, in accordance with equation (1) above. These basic scrambling bits are used to formulate an address to one or more spreading sequence correlation lookup tables 32, which also uses channelization code indices to provide the desired spreading sequence correlation value. Channelization code indices are used to select which table to address. The retrieved spreading sequence correlation value(s) is/are used by a correlation estimator 46 along with estimated channel coefficients, path delays, and perhaps other information to determine combining weights. A multicode detector 14 uses the combining weights in determining the modulation values for each of the jointly detected symbols in the one or more symbol blocks. Figure 10 is a portion of a radio receiver that provides spreading sequence correlations in accordance with another non-limiting example embodiment. Here, the basic scrambling bits are generated by two basic scrambling bits generators 30A and 30B (see the discussion above for two symbol blocks in Figure 4 and for intra-block code correlations and Figure 9).

Figure 11 is a non-limiting example of an uplink long scrambling sequence generator 36 that may be used to generate two component sequences $c_{long,1,n}$ and $c_{long,2,n}$. These scrambling generation bits are used to generate the complex-valued, uplink long scrambling sequence according to equation (1) above. The generator 36 includes two parallel shift registers with various bits being tapped as inputs to exclusive-OR operations as shown.

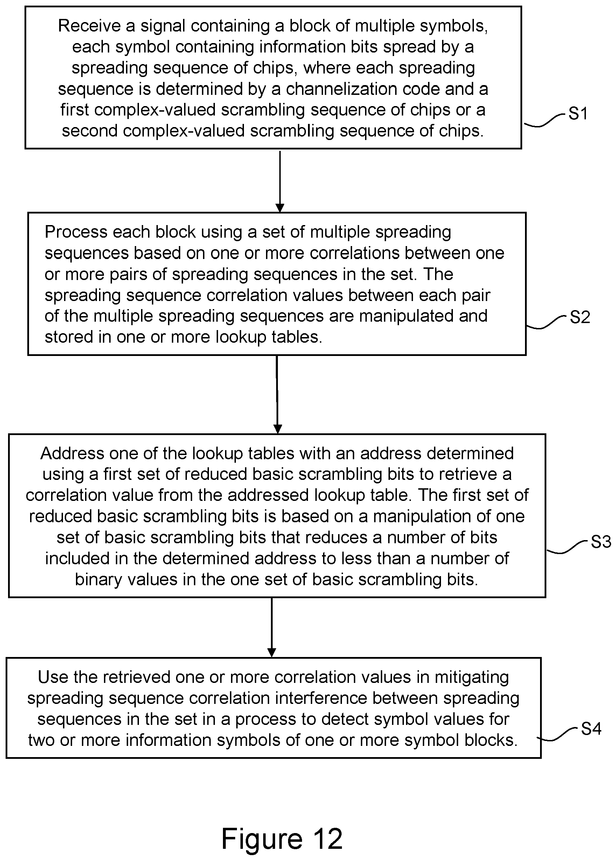

Figure 12 is a flowchart of non-limiting example procedures for generating and using correlation values for a signal received containing a symbol block of multiple symbols, each symbol containing information bits spread by a spreading sequence of chips (step S1). Each spreading sequence is determined by a channelization sequence and a first complex-valued scrambling sequence of chips or a second complex-valued scrambling sequence of chips. Each symbol block is processed using a set of multiple spreading sequences using one or more correlations between one or more pairs of spreading sequences in the set (step S2). Spreading sequence correlation values between each pair of the multiple spreading sequences in the set are stored in one or more lookup tables. One of the lookup tables is addressed with an address determined using a first set of reduced basic scrambling bits to retrieve one or more correlation values from the addressed lookup table (step S3). The first set of reduced basic scrambling bits is based on manipulation of one set of basic scrambling bits that reduces a number of bits included in the determined address to less than a number of binary values in the one set of basic scrambling bits. The one set of basic scrambling bits is based on either the scrambling sequences or on the scrambling generation bits. As described above, for an example 4-chip long QPSK scrambling sequence with 8 binary values, example technique A reduces the 8 bits to 6 bits. Manipulations for example techniques B and C to achieve further reductions were described above. The retrieved one or more correlation values is then used in mitigating spreading sequence correlation interference between spreading sequences in the set in a process to detect symbol values for two or more information symbols in one or more symbol blocks (step S4).

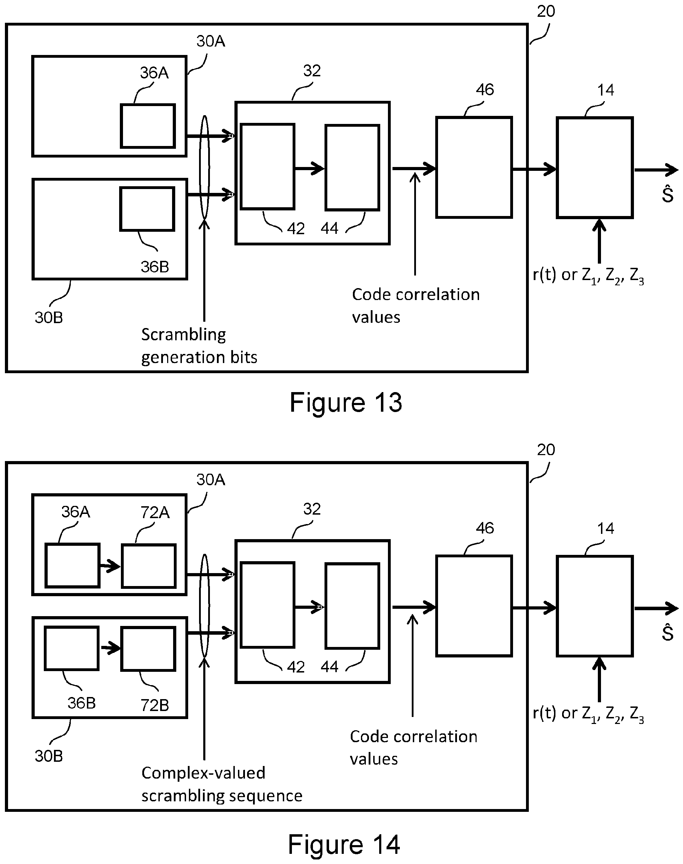

Figure 13 is a function block diagram of a Rake processor 20 that may be used for example in the radio receiver of Figure 2 to generate combining weights for the multicode detector 14 in accordance with a non-limiting example embodiment. Scrambling sequence generators 36A and 36B (Figure 11 shows one non-limiting example) in respective basic scrambling bits generators 30A and 30B provide a first set and a second set of scrambling generation bits to an address generator 42. The address generator 42 applies technique A, technique B, or technique C or any combination of these techniques to these sets of scrambling generation bits to generate an address to access a desired spreading sequence correlation value stored in one or more lookup tables 44.

Figure 14 is similar to Figure 13 with additional sequence generators 72A and 72B in 30A and 30B respectively to use a first set and a second set of scrambling generation bits to generate first and second binary-valued scrambling sequences which are used as input to the address generator 42. The address generator 42 applies technique A, technique B, or technique C or any combination of these techniques to these scrambling sequences to generate an address to access a desired spreading sequence correlation value stored in one or more lookup tables 44.

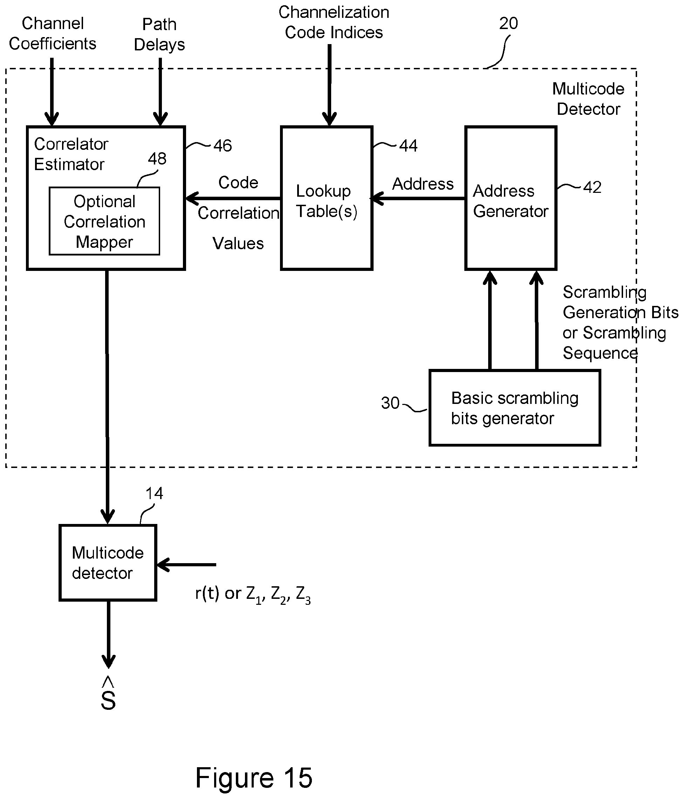

Figure 15 is a function block diagram of a multicode detector 14 that may be used for example in the radio receiver of Figure 2 in accordance with a non-limiting example embodiment. Although separate blocks are shown for purposes of illustration, one, multiple ones, or all of these blocks may be implemented using dedicated and/or suitably programmed/configured general purpose data processing circuitry. A basic scrambling bits generator 30 (Figure 13 and figure 14 show two non-limiting examples) provides first and second binary-valued scrambling sequences, or first set and second set of scrambling generation bits, to the address generator 42 to generate an address to access a desired spreading sequence correlation value stored in one or more lookup tables 44. Channelization code indices are used to select the lookup table to be addressed. The accessed spreading sequence correlation value is processed by a symbol waveform correlation estimator 46 along with channel coefficients and path delays to compute for example an effective spreading waveform correlation matrix R. If the correlation value received from the lookup table is not the actual spreading sequence correlation, then one or more optional correlation mappers 48 may be used in the correlator estimator 46 to map the received correlation value to an actual spreading sequence correlation. A multicode detector 14 estimates the symbols based on symbol waveform correlations.

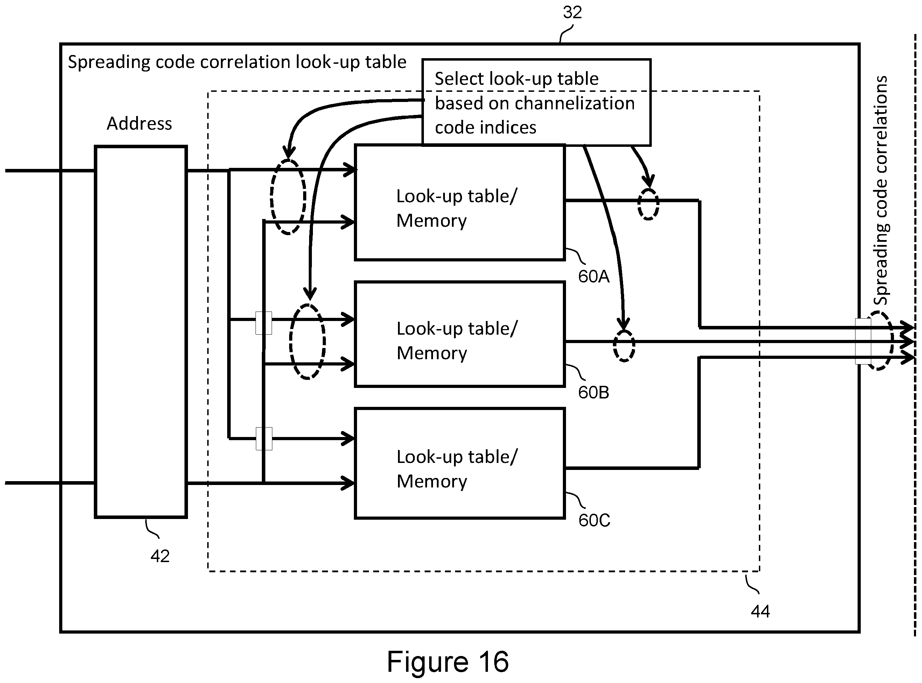

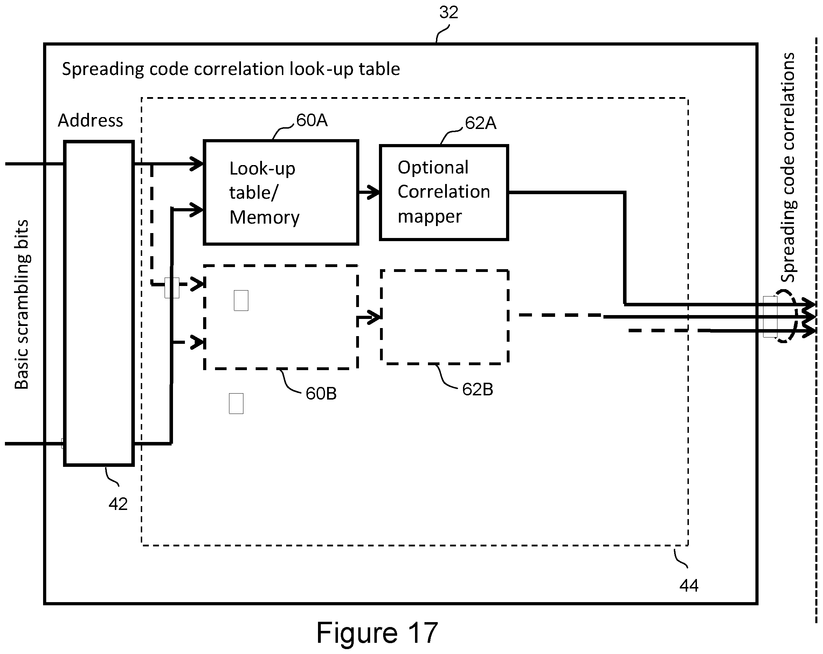

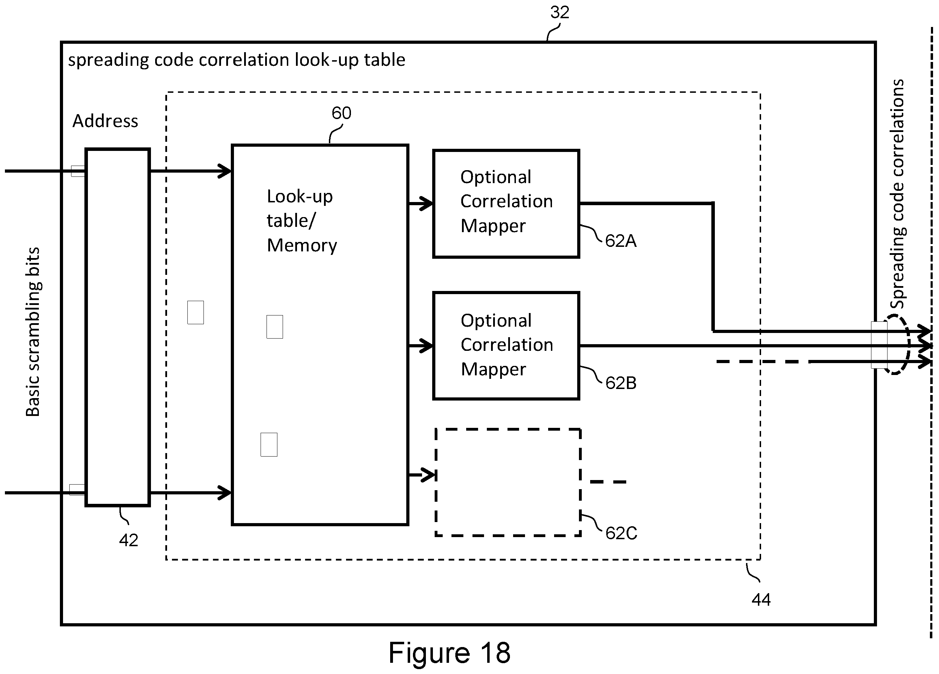

Figure 16 shows a non-limiting example embodiment that uses multiple spreading sequence correlation lookup tables 60A, 60B, and 60C. Figure 17 shows a non-limiting example embodiment that uses multiple spreading sequence correlation lookup tables 60A and 60B and corresponding optional correlation mappers 62A and 62B. Figure 18 shows a non-limiting example embodiment with one spreading sequence correlation lookup table 60 and multiple optional correlation mappers 62A-62C.

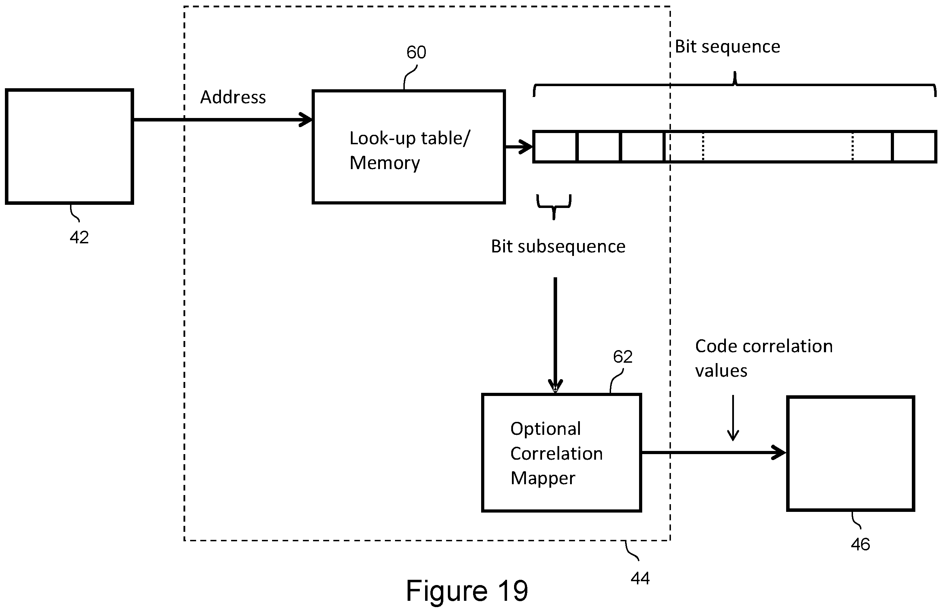

Figure 19 shows a non-limiting example of a spreading sequence correlation lookup table 60 output used by one or more optional correlation mappers 62. The address determined using one example technique applied to the basic scrambling bits (scrambling generation bits or scrambling sequence) chooses the appropriate row in the lookup table. In that row, a sequence of bits is accessed. Subsequences of this bit sequence correspond to different spreading code correlations and/or correlation lags, for example, the first 2 bits might correspond to the correlation of $S_{4,1}^{m}$ and $S_{4,1}^{n}$ at lag -3, that is, $\left(S_{4,1}^{m} * S_{4,1}^{n}\right)(-3)$, while the subsequent 4 bits correspond to the correlation of the same spreading codes but at lag -2, that is, $\left(S_{4,1}^{m} * S_{4,1}^{n}\right)(-2)$. Different correlation mappers may be used to obtain the actual correlation values. One example mapper might map 2 bits to correlation coefficient values {+2, +2j, -2, -2j}, while another mapper maps 4 bits to correlation coefficient values {0, +2+2j, +2-2j, -2+2j, 2-2j, +4, +4j, -4, -4j}.

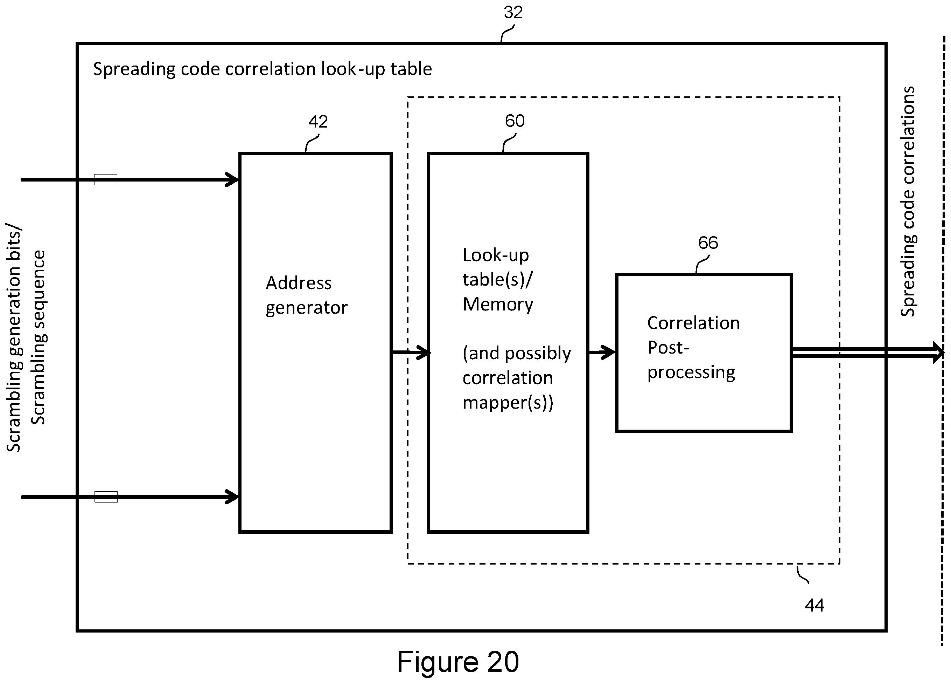

Figure 20 shows a non-limiting example embodiment with a spreading sequence correlation lookup table 60 with correlation post-processing 66 that may be used to implement example technique A or C described above which reduces the lookup table storage requirements. If, for example, technique C is used, the address generator 42 can form $a_n$ and $a_m$ as described above, examine whether $a_n \geq a_m$ or $a_n < a_m$, and in the latter case, exchange values of $a_n$ and $a_m$ when computing the row address and changing the sign of the time lag $t$ to $-t$ when determining which correlation value to access in the sequence of bits found at the row address as described above. The post-processing 66 then examines the original $a_n$ and $a_m$, and if $a_n < a_m$, then the post-processing 66 post-processes the value received from 60 by taking the complex conjugate of that value and using the result as spreading code correlation.

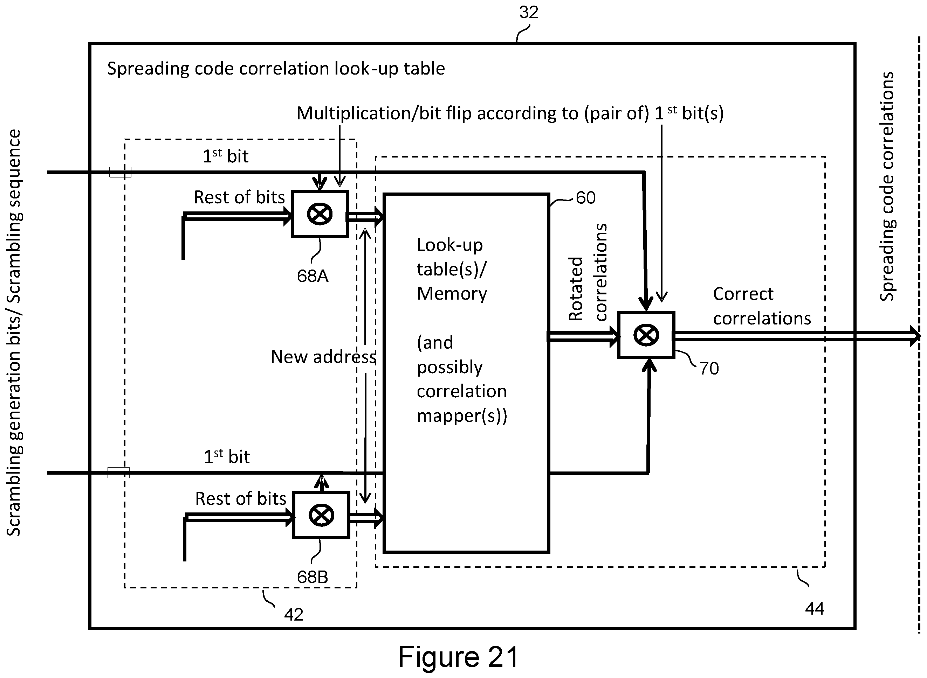

Figure 21 shows another non-limiting example embodiment of a spreading sequence correlation lookup table that may be used to implement example technique B described above. Address pre-processing at multipliers/bit flippers 68A, 68B and correlation post-processing at multipliers/bit flipper 70 reduces the required storage space of the lookup table(s). For example, the first bit $c_{long,1,I}(m)$ is removed from the sequence of reduced basic scrambling bits $c_{long,1,I}(m)$,

$c_{long,1,l}(m+1)$, $c_{long,1,l}(m+2)$, $c_{long,1,l}(m+3)$, $c_{long,2,l}(m)$, $c_{long,2,l}(m+2)$, and in multiplier/bit flipper 68A, the first bit $c_{long,1,l}(m)$ is multiplied with the rest of these reduced basic scrambling bits $c_{long,1,l}(m+1)$, $c_{long,1,l}(m+2)$, $c_{long,1,l}(m+3)$, $c_{long,2,l}(m)$, $c_{long,2,1}(m+2)$ to obtain the bit sequence $c_{long,1,l}(m)c_{long,1,l}(m+1)$, $c_{long,1,l}(m)c_{long,1,l}(m+2)$, $c_{long,1,l}(m)c_{long,1,l}(m+3)$, $c_{long,1,l}(m)c_{long,2,1}(m)$, $c_{long,1,l}(m)c_{long,2,1}(m+2)$. A corresponding procedure is used in multiplier/bit flipper 68B but with the bit sequence $c_{long,1,l}(n)$, $c_{long,1,1}(n+1)$, $c_{long,1,l}(n+2)$, $c_{long,1,l}(n+3)$, $c_{long,2,1}(n)$, $c_{long,2,l}(n+2)$ to obtain the bit sequence $c_{long,1,l}(n)c_{long,1,1}(n+1)$, $c_{long,1,l}(n)c_{long,1,l}(n+2)$, $c_{long,1,l}(n)c_{long,1,l}(n+3)$, $c_{long,1,l}(n)c_{long,2,l}(n)$, $c_{long,1,l}(n)c_{long,2,l}(n+2)$, The bit sequences obtained from multipliers/bit flippers 68A and 68B are used as an address in the look-up table(s). The multiplication in multipliers/bit flippers 68A and 68B can be realized as bit flips where the input bits denoted "rest of bits" are flipped, that is, changed to the opposite value, if the bit denoted "1st bit" has a value of -1. The output of the look-up table(s) denoted "rotated correlations" is multiplied by $c_{long,1,l}(m)c_{long,1,l}(n)$ in 70, or if realized as bit flips, the sign of the real and imaginary values of the correlation values denoted "rotated correlations" is changed if $c_{long,1,l}(m)c_{long,1,l}(n)$ has the value -1.

Although the non-limiting examples above are given for a single peak rate user, the code correlations computed in the tables may also be used for joint detection of multiple users or for symbol-level IC of multiple users. The non-limiting examples use 4-chip blocks, but spreading code correlations for symbol blocks of larger size may be obtained by post-processing (summing) the correct values from the tables. The same lookup tables may be used in a variety of applications. One example is in maximum likelihood sequence estimation (MLSE) used as a last step in multi-stage group detection (MSGD), also known as assisted maximum likelihood detection, (AMLD).

The technology described above uses the structure of the scrambling code together with pre-computed lookup tables to quickly obtain correlations between the spreading codes. The technology is relatively computationally inexpensive and requires only a small memory compared to pre-computing and storing all possible correlations.

**Claims**

1. A method in a receiver, comprising:

receiving a signal containing a block of multiple symbols, each symbol containing information bits spread by a spreading sequence of chips, where each spreading sequence is determined by a channelization sequence and a first complex-valued scrambling sequence of chips or a second complex-valued scrambling sequence of chips (S1), wherein the complex-valued scrambling sequence is defined by:

$$C_{long,n}(i) = c_{long,1,n}(i)\left(1 + j(-1)^i c_{long,2,n}\left(2\lfloor i/2 \rfloor\right)\right)$$

wherein:

i is a chip index starting at 0, n is the long scrambling code number, $\lfloor\rfloor$ denotes rounding to the nearest lower integer, the block is a 4-chip symbol block,
the binary values of the scrambling sequence are eight binary values based on the binary values $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ and correspond to a set of basic scrambling bits, and
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ correspond to a reduced set of basic scrambling bits ;

processing each symbol block using a set of multiple spreading sequences using one or more correlations between one or more pairs of spreading sequences in the set, wherein spreading sequence correlation values between each pair of the multiple spreading sequences in the set are manipulated and stored in one or more lookup tables (S2);
addressing one of the lookup tables with an address determined using a first set of reduced basic scrambling bits to retrieve one or more correlation values from the addressed lookup table, wherein the first set of reduced basic scrambling bits is based on manipulation of one set of basic scrambling bits which reduces a number of bits included in the determined address to less than a number of binary values in the one set of basic scrambling bits (S3), wherein the one set of basic scrambling bits is used to construct one of the first and second complex-valued scrambling sequences; and
using the retrieved one or more correlation values in mitigating spreading sequence correlation interference between spreading sequences in the set in a process to detect symbol values for two or more information symbols in the symbol block (S4).

2. The method in claim 1, wherein manipulation of the one set of basic scrambling bits includes exploiting one or more redundancies of the one set of basic scrambling bits.

3. The method in claim 2, wherein the manipulation includes eliminating at least one bit in the one set of basic scrambling bits for addressing the one lookup table based on a redundant bit value in the one set of basic scrambling bits.

4. The method in claim 2, wherein the manipulation includes storing only a correlation value for two different correlations between each pair of the multiple spreading sequences.

5. The method in claim 4, wherein the first set of address bits represents a number that is smaller than or equal to the number represented by the second set of address bits.

6. The method of claim 4, wherein the first set of address bits represents a number that is greater than the number represented by the second set of address bits, exchanging values of the first and the second sets address bits to compute the address value, and changing the sign of the time lag to find the address in one of the lookup tables.

7. The method in claim 2, wherein the manipulation includes storing entries in the lookup table only where a first bit in each of two of the first set of scrambling generation bits is equal to 0 in a 0/1 representation of binary bits.

8. The method in claim 7, wherein the address bits used to access the lookup table do not contain the first bit.

9. The method in claim 1, wherein each complex-valued scrambling sequence is determined by a first binary-valued scrambling sequence that determines a real part of the complex-valued scrambling sequence and a second binary-valued scrambling sequence that determines an imaginary part of the complex-valued scrambling sequence.

10. The method in claim 9, further comprising:

    generating the first and second binary-valued scrambling sequences for the first complex-valued scrambling sequence, and
    determining the first set of the reduced basic scrambling bits based on the first and second binary-valued scrambling sequences for the first complex-valued scrambling sequence.

11. The method in claim 10, wherein the address includes a first set of address bits and a second set of address bits, the method further comprising:

    generating the first and second binary-valued scrambling sequences for the second complex-valued scrambling sequence;
    determining a second set of reduced basic scrambling bits based on the first and second binary-valued scrambling sequences for the second complex-valued scrambling sequence; and
    determining the second set of address bits based on the second set of the reduced basic scrambling bits, wherein the one lookup table is addressed with an address determined using the first set of address bits and the second set of address bits to retrieve a first set of correlation values associated with the spreading sequences of the two or more information symbols.

12. Apparatus for a receiver, comprising:

    a receiver (10) configured to receive a signal containing a block of multiple symbols, each symbol containing information bits spread by a spreading sequence of chips, where each spreading sequence is determined by a channelization sequence and a first complex-valued scrambling sequence of chips or a second complex-valued scrambling sequence of chips, wherein the complex-valued scrambling sequence is defined by:

$$C_{long,n}(i) = c_{long,1,n}(i)\left(1 + j(-1)^i c_{long,2,n}\left(2\lfloor i/2 \rfloor\right)\right)$$

wherein:

i is a chip index starting at 0, n is the long scrambling code number, ⌊⌋denotes rounding to the nearest lower integer, the block is a 4-chip symbol block,
the binary values of the scrambling sequence are eight binary values based on the binary values $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ and correspond to a set of basic scrambling bits, and
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ correspond to a reduced set of basic scrambling bits;

> correlation circuitry (46) configured to process each block using a set of multiple spreading sequences using one or more correlations between one or more pairs of spreading sequences in the set, wherein spreading sequence correlation values between each pair of the multiple spreading sequences in the set are manipulated and stored in one or more lookup tables (44); and
> an address generator (42) configured to address one of the lookup tables with an address determined using a first set of reduced basic scrambling bits to retrieve one or more correlation values from the addressed lookup table, wherein the first set of reduced basic scrambling bits is used to construct one of the first and second complex-valued scrambling sequences and is based on manipulation of the one set of basic scrambling bits which reduces a number of bits included in the determined address to less than a number of binary values in the one set of basic scrambling bits,
> symbol estimation circuitry (52) configured to use the retrieved one or more correlation values in mitigating spreading sequence correlation interference between spreading sequences in the set in a process to detect symbol values for two or more information symbols in the received block.

**13.** The apparatus in claim 12, wherein manipulation of the one scrambling sequence includes exploiting one or more redundancies of the one scrambling sequence.

**14.** The apparatus in claim 13, wherein each complex-valued scrambling sequence is determined by a first binary-valued scrambling sequence that determines a real part of the complex-valued scrambling sequence and a second binary-valued scrambling sequence that determines an imaginary part of the complex-valued scrambling sequence.

**Patentansprüche**

**1.** Verfahren in einem Empfänger, umfassend:

Empfangen eines Signals, das einen Block mit mehreren Symbolen enthält, wobei jedes Symbol Datenbits enthält, die durch eine Spreizfolge von Chips gespreizt sind, wobei jede Spreizfolge durch eine Kanalisierungsfolge und eine erste komplexwertige Verwürfelungsfolge von Chips oder eine zweite komplexwertige Verwürfelungsfolge von Chips (S1) bestimmt ist, wobei die erste komplexwertige Verwürfelungsfolge definiert ist durch:

$$C_{long,n}(i) = c_{long,1,n}(i)\left(1 + j(-1)^i c_{long,2,n}\left(2\lfloor i/2 \rfloor\right)\right)$$

worin:

i ein Chipindex ist, der mit 0 beginnt,
n die längste Verwürfelungscodenummer ist, ⌊ ⌋ das Abrunden auf die nächste ganze Zahl darstellt, der Block ein 4-Chip-Symbolblock ist,
die binären Werte der Verwürfelungsfolge acht binäre Werte auf der Grundlage der binären Werte $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ sind und einem Satz grundlegender Verwürfelungsbits entsprechen, und
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ einem verkleinerten Satz Verwürfelungsgrundbits entsprechen;
Verarbeiten jedes Symbolblocks unter Verwendung eines Satzes mehrerer Spreizfolgen, die eine oder mehrere Korrelationen zwischen einem oder mehreren Spreizfolgepaaren des Satzes verwenden, wobei die Spreizfolge-Korrelationswerte zwischen jedem Paar der mehreren Spreizfolgen des Satzes in einer oder mehreren Suchtabellen manipuliert und gespeichert werden (S2);
Adressieren einer der Suchtabellen mit einer Adresse, die unter Verwendung eines ersten Satzes verkleinerter Verwürfelungsgrundbits zum Abrufen einer oder mehrerer Korrelationswerte aus der adressierten Suchtabelle bestimmt wird, wobei der erste Satz verkleinerter Verwürfelungsgrundbits auf einer Manipulation eines Satzes Verwürfelungsgrundbits basiert, die eine Anzahl an in der bestimmten Adresse enthaltenen Bits auf weniger als eine Anzahl binärer Werte in dem einen Satz Verwürfelungsgrundbits (S3) reduziert, wobei der eine Satz Verwürfelungsgrundbits zum Konstruieren einer der ersten und der zweiten komplexwertigen Verwürfelungsfolge verwendet wird; und

Verwenden der abgerufenen einen oder mehreren Korrelationswerte beim Mindern der Spreizfolge-Korrelationsinterferenz zwischen Spreizfolgen des Satzes in einem Verfahren zum Erkennen von Symbolwerten für zwei oder mehr Datensymbole in dem Symbolblock (S4).

2. Verfahren nach Anspruch 1, wobei die Manipulation des einen Satzes Verwürfelungsgrundbits das Nutzen einer oder mehrerer Redundanzen des einen Satzes Verwürfelungsgrundbits enthält.

3. Verfahren nach Anspruch 2, wobei die Manipulation das Eliminieren mindestens eines Bits in dem einen Satz Verwürfelungsgrundbits zum Adressieren der Suchtabelle auf der Grundlage eines Werts eines redundanten Bits in dem einen Satz Verwürfelungsgrundbits enthält.

4. Verfahren nach Anspruch 2, wobei die Manipulation das Speichern nur eines Korrelationswerts für zwei verschiedene Korrelationen zwischen jedem Paar der mehreren Spreizfolgen enthält.

5. Verfahren nach Anspruch 4, wobei der erste Satz Adressenbits eine Anzahl darstellt, die kleiner oder gleich der Anzahl ist, die von dem zweiten Satz Adressenbits dargestellt wird.

6. Verfahren nach Anspruch 4, wobei der erste Satz Adressenbits eine Anzahl darstellt, die größer als die Anzahl ist, die von dem zweiten Satz Adressenbits dargestellt wird, wobei Werte des ersten und des zweiten Satzes Adressenbits ausgetauscht werden, um den Adressenwert zu berechnen, und wobei das Vorzeichen der Zeitverzögerung geändert wird, um die Adresse in einer der Suchtabellen zu finden.

7. Verfahren nach Anspruch 2, wobei die Manipulation nur dann das Speichern von Einträgen in der Suchtabelle enthält, wenn ein erstes Bit in jeden von zwei des ersten Satzes Verwürfelungserzeugungsbits bei einer 0/1-Verteilung der binären Bits gleich 0 ist.

8. Verfahren nach Anspruch 7, wobei die zum Zugriff auf die Suchtabelle verwendeten Adressenbits nicht das erste Bit enthalten.

9. Verfahren nach Anspruch 1, wobei jede komplexwertige Verwürfelungsfolge durch eine erste binärwertige Verwürfelungsfolge, die einen realen Teil der komplexwertigen Verwürfelungsfolge bestimmt, und eine zweite binärwertige Verwürfelungsfolge bestimmt wird, die einen imaginären Teil der komplexwertigen Verwürfelungsfolge bestimmt.

10. Verfahren nach Anspruch 9, ferner umfassend:

Erzeugen der ersten und der zweiten binärwertigen Verwürfelungsfolge für die erste komplexwertige Verwürfelungsfolge, und

Bestimmen des ersten Satzes verkleinerter Verwürfelungsgrundbits auf der Grundlage der ersten und der zweiten binärwertigen Verwürfelungsfolge der ersten komplexwertigen Verwürfelungsfolge.

11. Verfahren nach Anspruch 10, wobei die Adresse einen ersten Satz Adressenbits und einen zweiten Satz Adressenbits enthält, wobei das Verfahren ferner umfasst:

Erzeugen der ersten und der zweiten binärwertigen Verwürfelungsfolge für die zweite komplexwertige Verwürfelungsfolge;

Bestimmen eines zweiten Satzes verkleinerter Verwürfelungsgrundbits auf der Grundlage der ersten und der zweiten binärwertigen Verwürfelungsfolge der zweiten komplexwertigen Verwürfelungsfolge; und

Bestimmen des zweiten Satzes Adressenbits auf der Grundlage des zweiten Satzes verkleinerter Verwürfelungsgrundbits,

wobei die eine Suchtabelle mit einer Adresse adressiert wird, die unter Verwendung des ersten Satzes Adressenbits und des zweiten Satzes Adressenbits zum Abrufen eines ersten Satzes Korrelationswerte bestimmt wird, die mit den Spreizfolgen der zwei oder mehr Datensymbole verknüpft sind.

**12.** Vorrichtung für einen Empfänger, umfassend:

einen Empfänger (10), der zum Empfangen eines Signals konfiguriert ist, das einen Block mit mehreren Symbolen enthält, wobei jedes Symbol Datenbits enthält, die durch eine Spreizfolge von Chips gespreizt sind, wobei jede Spreizfolge durch eine Kanalisierungsfolge und eine erste komplexwertige Verwürfelungsfolge von Chips oder eine zweite komplexwertige Verwürfelungsfolge von Chips bestimmt ist, wobei die erste komplexwertige Verwürfelungsfolge definiert ist durch:

$$C_{long,n}(i) = c_{long,1,n}(i)\left(1 + j(-1)^i c_{long,2,n}\left(2\lfloor i/2 \rfloor\right)\right)$$

worin:

i ein Chipindex ist, der mit 0 beginnt,
n die längste Verwürfelungscodenummer ist,$\lfloor \rfloor$ das Abrunden auf die nächste ganze Zahl darstellt, der Block ein 4-Chip-Symbolblock ist,
die binären Werte der Verwürfelungsfolge acht binäre Werte auf der Grundlage der binären Werte $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ sind und einem Satz grundlegender Verwürfelungsbits entsprechen, und
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ einem verkleinerten Satz Verwürfelungsgrundbits entsprechen;
Korrelationsschaltungen (46), die zum Verarbeiten jedes Blocks unter Verwendung eines Satzes mehrerer Spreizfolgen konfiguriert sind, die eine oder mehrere Korrelationen zwischen einem oder mehreren Spreizfolgepaaren des Satzes verwenden, wobei die Spreizfolge-Korrelationswerte zwischen jedem Paar der mehreren Spreizfolgen des Satzes in einer oder mehreren Suchtabellen manipuliert und gespeichert werden (44); und
einen Adressengenerator (42), der zum Adressieren einer der Suchtabellen mit einer Adresse konfiguriert ist, die unter Verwendung eines ersten Satzes verkleinerter Verwürfelungsgrundbits zum Abrufen einer oder mehrerer Korrelationswerte aus der adressierten Suchtabelle bestimmt wird, wobei der erste Satz verkleinerter Verwürfelungsgrundbits zum Konstruieren einer der ersten und der zweiten komplexwertigen Verwürfelungsfolge verwendet wird und auf einer Manipulation des einen Satzes Verwürfelungsgrundbits basiert, die eine Anzahl an in der bestimmten Adresse enthaltenen Bits auf weniger als eine Anzahl binärer Werte in dem einen Satz Verwürfelungsgrundbits reduziert,
Symbolschätzschaltungen (52), die zum Verwenden der abgerufenen einen oder mehreren Korrelationswerte beim Mindern der Spreizfolge-Korrelationsinterferenz zwischen Spreizfolgen des Satzes in einem Verfahren zum Erkennen von Symbolwerten für zwei oder mehr Datensymbole in dem empfangenen Block konfiguriert sind.

**13.** Vorrichtung nach Anspruch 12, wobei die Manipulation der einen Verwürfelungsfolge das Nutzen einer oder mehrerer Redundanzen der einen Verwürfelungsfolge enthält.

**14.** Vorrichtung nach Anspruch 13, wobei jede komplexwertige Verwürfelungsfolge durch eine erste binärwertige Verwürfelungsfolge, die einen realen Teil der komplexwertigen Verwürfelungsfolge bestimmt, und eine zweite binärwertige Verwürfelungsfolge bestimmt wird, die einen imaginären Teil der komplexwertigen Verwürfelungsfolge bestimmt.

**Revendications**

**1.** Procédé dans un récepteur, comprenant :

la réception d'un signal contenant un bloc de symboles multiples, chaque symbole contenant des bits d'information étalés par une séquence d'étalement de puces, où chaque séquence d'étalement est déterminée par une séquence de canalisation et une première séquence de brouillage de valeur complexe de puces ou une seconde séquence de brouillage de valeur complexe de puces (S1), dans lequel la séquence de brouillage de valeur complexe est définie par l'expression suivante :

$$C_{long,n}(i) = c_{long,1,n}(i)\left(1+j(-1)^i c_{long,2,n}(2\lfloor i/2\rfloor)\right)$$

où :

i est un indice de puce démarrant à 0,

n est le numéro de code de brouillage long, $\lfloor\ \rfloor$ désigne l'arrondissement au nombre entier inférieur le plus proche, le bloc est un bloc de symboles de 4 puces,

les valeurs binaires de la séquence de brouillage sont de huit valeurs binaires sur la base des valeurs binaires $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ et correspondent à un ensemble de bits de brouillage basiques, et

$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ correspondent à un jeu réduit de bits de brouillage basique ;

le traitement de chaque bloc de symboles utilisant un ensemble de séquences d'étalement multiples en utilisant une ou plusieurs corrélations entre une ou plusieurs paires de séquences d'étalement dans l'ensemble, dans lequel des valeurs de corrélation de séquences d'étalement entre chaque paire des séquences d'étalement multiples de l'ensemble sont manipulées et stockées dans une ou plusieurs tables de consultation (S2) ;

l'adressage d'une des tables de consultation avec une adresse déterminée en utilisant un premier ensemble de bits de brouillage basique réduit pour récupérer une ou plusieurs valeurs de corrélation dans la table de consultation adressée, dans lequel le premier ensemble de bits de brouillage basique réduit est basé sur la manipulation d'un ensemble de bits de brouillage basique qui réduit un nombre de bits inclus dans l'adresse déterminée à moins d'un nombre de valeurs binaires dans le un ensemble de bits de brouillage basique (S3), dans lequel le un ensemble de bits de brouillage basique est utilisé pour construire une de la première et de la seconde séquence de brouillage de valeur complexe ; et

l'utilisation des une ou plusieurs valeurs de corrélation récupérées en atténuant l'interférence de corrélation des séquences d'étalement entre des séquences d'étalement de l'ensemble dans un processus de détection de valeurs de symboles pour deux ou plusieurs symboles d'information du bloc de symboles (S4).

2. Procédé selon la revendication 1, dans lequel la manipulation du un ensemble de bits de brouillage basique comprend l'exploitation d'une ou plusieurs redondances du un ensemble de bits de brouillage basique.

3. Procédé selon la revendication 2, dans lequel la manipulation comprend l'élimination d'au moins un bit du un ensemble de bits de brouillage basique pour adresser la une table de consultation sur la base d'une valeur binaire redondante dans le un ensemble de bits de brouillage basique.

4. Procédé selon la revendication 2, dans lequel la manipulation comprend le stockage de seulement une valeur de corrélation pour deux corrélations différentes entre chaque paire de séquences d'étalement multiples.

5. Procédé selon la revendication 4, dans lequel le premier ensemble de bits d'adresse représente un nombre qui est inférieur ou égal au nombre représenté par le second ensemble de bits d'adresse.

6. Procédé selon la revendication 4, dans lequel le premier ensemble de bits d'adresse représente un nombre qui est supérieur au nombre représenté par le second ensemble de bits d'adresse, en échangeant des valeurs du premier et du second ensemble de bits d'adresse afin de calculer la valeur d'adresse et en modifiant le signe du retard temporel pour trouver l'adresse dans l'une des tables de consultation.

7. Procédé selon la revendication 2, dans lequel la manipulation comprend le stockage d'entrées dans la table de consultation uniquement lorsqu'un premier ensemble de chacun de deux du premier ensemble de bits générateurs de brouillage est égal à 0 dans une représentation 0/1 de bits binaires.

8. Procédé selon la revendication 7, dans lequel les bits d'adresse utilisés pour accéder à la table de consultation ne contiennent pas le premier bit.

9. Procédé selon la revendication 1, dans lequel chaque séquence de brouillage de valeur complexe est déterminée par une première séquence de brouillage de valeur binaire qui détermine une partie réelle de la séquence de brouillage de valeur complexe et une deuxième séquence de valeur binaire qui détermine une partie imaginaire de la séquence de brouillage de valeur complexe.

**10.** Procédé selon la revendication 9, comprenant :

la génération de la première et de la deuxième séquence de brouillage de valeur binaire pour la première séquence de brouillage de valeur complexe, et
la détermination du premier ensemble de bits de brouillage basique réduit sur la base de la première et de la seconde séquence de brouillage de valeur binaire pour la première séquence de brouillage de valeur complexe.

**11.** Procédé selon la revendication 10, dans lequel l'adresse comprend un premier ensemble de bits d'adresse et un second ensemble de bits d'adresse, le procédé comprenant en outre :

la génération de la première et de la seconde séquence de brouillage de valeur binaire pour la seconde séquence de brouillage de valeur complexe ;
la détermination d'un second ensemble de bits de brouillage basique réduit sur la base de la première et de la seconde séquence de brouillage de valeur binaire pour la seconde séquence de brouillage de valeur complexe ; et
la détermination du second ensemble de bits d'adresse sur la base du second ensemble des bits de brouillage basique réduit,
dans lequel la une table de consultation est adressée par une adresse déterminée utilisant le premier ensemble de bits d'adresse et le second ensemble de bits d'adresse pour récupérer un premier ensemble de valeurs de corrélation associées aux séquences d'étalement des deux ou plusieurs symboles d'information.

**12.** Appareil pour un récepteur comprenant :

un récepteur (10) configuré pour recevoir un signal contenant un bloc de multiples symboles, chaque symbole contenant des bits d'information étalés par une séquence d'étalement de puces, où chaque séquence d'étalement est déterminée par une séquence de canalisation et une première séquence de brouillage de valeur complexe de puces ou une seconde séquence de brouillage de valeur complexe de puces, dans lequel la séquence de brouillage de valeur complexe est définie par :

$$C_{long,n}(i) = c_{long,1,n}(i)\left(1 + j(-1)^i c_{long,2,n}(2\lfloor i/2 \rfloor)\right)$$

où :

i est un indice de puce démarrant à 0,
n est le numéro de code de brouillage long, $\lfloor \rfloor$ désigne l'arrondissement au nombre entier inférieur le plus proche, le bloc est un bloc de symbole de 4 puces,
les valeurs binaires de la séquence de brouillage sont de huit valeurs binaires sur la base des valeurs binaires $c_{long,1,n}(0)$, $c_{long,2,n}(0)$, $c_{long,1,n}(1)$, $c_{long,2,n}(1)$, $c_{long,1,n}(2)$, $c_{long,2,n}(2)$, $c_{long,1,n}(3)$, $c_{long,2,n}(3)$ et correspondent à un ensemble de bits de brouillage basique, et
$c_{long,1,n}(0)$, $c_{long,2,n}(0)$, $c_{long,1,n}(1)$, $c_{long,1,n}(2)$, $c_{long,2,n}(2)$, $c_{long,1,n}(3)$ correspondent à un ensemble réduit de bits de brouillage basique ;
un circuit de corrélation (46) configuré pour traiter chaque bloc utilisant un ensemble de multiples séquences d'étalement en utilisant une ou plusieurs corrélations entre une ou plusieurs paires de séquences d'étalement de l'ensemble, dans lequel des valeurs de corrélation de séquences d'étalement entre chaque paire des multiples séquences d'étalement de l'ensemble sont manipulées et stockées dans une ou plusieurs tables de consultation (44) ; et
un générateur d'adresse (42) configuré pour adresser l'une des tables de consultation par une adresse déterminée en utilisant un premier ensemble de bits de brouillage basique réduit pour récupérer une ou plusieurs valeurs de corrélation de la table de consultation adressée, dans lequel le premier ensemble de bits de brouillage basique réduit est utilisé pour construire l'une des première et seconde séquences de brouillage de valeur complexe et est basé sur la manipulation du un ensemble de bits de brouillage basique qui réduit un certain nombre de bits inclus dans l'adresse déterminée à moins d'un nombre de valeurs binaires dans le un ensemble de bits de brouillage basique,
un circuit d'estimation de symboles (52) configuré pour utiliser les une ou plusieurs valeurs de corrélation récupérées en atténuant l'interférence de corrélation des séquences d'étalement entre les séquences d'étalement dans l'ensemble par un procédé de détection de valeurs de symbole pour deux ou plus de symboles d'information dans le bloc reçu.

**13.** Appareil selon la revendication 12, dans lequel la manipulation de la une séquence de brouillage comprend l'exploitation d'une ou plusieurs redondances de la une séquence de brouillage.

**14.** Appareil selon la revendication 13, dans lequel chaque séquence de brouillage de valeur complexe est déterminée par une première séquence de brouillage de valeur binaire qui détermine une partie réelle de la séquence de brouillage de valeur complexe et une seconde séquence de brouillage de valeur binaire qui détermine une partie imaginaire de la séquence de brouillage de valeur complexe.

Figure 1

Figure 2

Figure 3

Figure 4

Figure 5

EP 2 920 888 B1

# Technique A Reduction

**Correlation lookup table**

**64** rows

Code 2

Code 1

Row address (6 bits)

Figure 6

Fourth bit is redundant and not needed. Only first three bits contribute to the address.

| | Lag | -1 | 0 | 1 |
|---|---|---|---|---|
| Row 0 | | | | |
| Row 1 | | | | |
| Row 2 | | | | |
| Row 3 | | | | |
| . | | | | |
| . | | | | |
| . | | | | |
| . | | | | |
| Row **63** | | | | |

# Technique B Reduction

## Correlation lookup table

## 16 rows

Code 1

Code 2

RA (4 bits)

Rows where first bit is 1 can be removed. Fourth bit is redundant. Only second and third bits contribute to the address.

Figure 7

EP 2 920 888 B1

# Technique C Reduction

The swapping operation

Row address → Modified row address

Complex conjugates

Figure 8

EP 2 920 888 B1

Figure 9

30A

Basic scrambling bits generator

Basic scrambling bits generator

30B

32

Spreading code correlation look-up table(s)

Channelization code indices

46

Correlator estimator

Channel coefficients, path delays, etc.

14

Multi code detector

Ŝ

r(t) or $Z_1$, $Z_2$, $Z_3$

Basic scrambling bits

Scrambling info

Figure 10

Code Generator    36

MSB

LSB

Scrambling generation bits

$c_{long,1,n}$

$c_{long,2,n}$

Figure 11

Receive a signal containing a block of multiple symbols, each symbol containing information bits spread by a spreading sequence of chips, where each spreading sequence is determined by a channelization code and a first complex-valued scrambling sequence of chips or a second complex-valued scrambling sequence of chips.    S1

Process each block using a set of multiple spreading sequences based on one or more correlations between one or more pairs of spreading sequences in the set. The spreading sequence correlation values between each pair of the multiple spreading sequences are manipulated and stored in one or more lookup tables.    S2

Address one of the lookup tables with an address determined using a first set of reduced basic scrambling bits to retrieve a correlation value from the addressed lookup table. The first set of reduced basic scrambling bits is based on a manipulation of one set of basic scrambling bits that reduces a number of bits included in the determined address to less than a number of binary values in the one set of basic scrambling bits.    S3

Use the retrieved one or more correlation values in mitigating spreading sequence correlation interference between spreading sequences in the set in a process to detect symbol values for two or more information symbols of one or more symbol blocks.    S4

Figure 12

Figure 13

Figure 14

Channel
Coefficients

Path
Delays

Channelization
Code Indices

20

Multicode
Detector

Correlator
Estimator ~46

48

Optional
Correlation
Mapper

Code
Correlation
Values

Lookup
Table(s) ~44

Address

Address
Generator ~42

Scrambling
Generation Bits
or Scrambling
Sequence

30~ Basic scrambling
bits generator

14

Multicode
detector

r(t) or $Z_1$, $Z_2$, $Z_3$

$\hat{S}$

Figure 15

Spreading code correlations

Spreading code correlation look-up table

32

44

Select look-up table based on channelization code indices

Look-up table/Memory 60A

Look-up table/Memory 60B

Look-up table/Memory 60C

Address 42

Figure 16

Figure 17

spreading code correlation look-up table

Address

Basic scrambling bits

60

Look-up table/ Memory

Optional Correlation Mapper — 62A

Optional Correlation Mapper — 62B

62C

42

44

Spreading code correlations

32

Figure 18

EP 2 920 888 B1

60

Address

Look-up table/
Memory

Bit sequence

Bit subsequence

42

Code correlation
values

62

Optional
Correlation
Mapper

46

Figure 19

44

Figure 20

Figure 21

EP 2 920 888 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080267265 A